(19) Europäisches Patentamt
European Patent Office
Office européen des brevets

(11) **EP 4 067 426 A1**

(12) **EUROPEAN PATENT APPLICATION**
published in accordance with Art. 153(4) EPC

(43) Date of publication:
**05.10.2022 Bulletin 2022/40**

(21) Application number: **20893706.0**

(22) Date of filing: **18.11.2020**

(51) International Patent Classification (IPC):
*C08K 5/00* (2006.01)      *C08K 7/06* (2006.01)
*C08L 81/02* (2006.01)      *C08L 101/00* (2006.01)
*C08J 5/04* (2006.01)

(52) Cooperative Patent Classification (CPC):
**C08J 5/04; C08K 5/00; C08K 7/06; C08L 81/02;
C08L 101/00**

(86) International application number:
**PCT/JP2020/042998**

(87) International publication number:
**WO 2021/106714 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2019 JP 2019212258**

(71) Applicant: **Toray Industries, Inc.
Tokyo, 103-8666 (JP)**

(72) Inventors:
• **HIRATA, Shin
Nagoya-shi, Aichi 455-8502 (JP)**
• **HAMAGUCHI, Mitsushige
Nagoya-shi, Aichi 455-8502 (JP)**

(74) Representative: **Mewburn Ellis LLP
Aurora Building
Counterslip
Bristol BS1 6BX (GB)**

(54) **FIBER-REINFORCED THERMOPLASTIC RESIN MOLDED ARTICLE**

(57)      A fiber reinforced thermoplastic resin molded article containing a thermoplastic resin [A] and carbon fibers [B], a content of the thermoplastic resin [A] being 50 to 95 parts by weight and a content of the carbon fibers [B] being 5 to 50 parts by weight per 100 parts by weight of a total of the thermoplastic resin [A] and the carbon fibers [B], the molded article having a bending elastic modulus of 30 GPa or more, an interfacial shear strength between the thermoplastic resin [A] and the carbon fibers [B] being 15 MPa or more, and a logarithmic decrement of the molded article calculated by Formula (1) shown below being less than 3. Provided is a thermoplastic resin molded article having excellent oscillation-sustaining property and thus having excellent acoustic properties.

$$\text{Logarithmic decrement } \delta = (1/n) \times \ln(\alpha_{(1)}/\alpha_{(1+n)})$$

Formula (1)

Formula (1)

EP 4 067 426 A1

**Description**

TECHNICAL FIELD

The present invention relates to a fiber reinforced thermoplastic resin molded article containing a thermoplastic resin and carbon fibers and capable of exhibiting excellent oscillation-sustaining property.

BACKGROUND ART

Molded articles containing reinforcing fibers and a thermoplastic resin are lightweight and have excellent dynamic properties, and therefore have been widely used in electric and electronic component applications, automobile applications, sporting goods applications, aerospace applications, general industrial applications, and the like. The reinforcing fibers used in these molded articles reinforce the molded articles in various forms depending on the application thereof. Examples of these reinforcing fibers include metal fibers such as aluminum fibers and stainless steel fibers, organic fibers such as aramid fibers and polyparaphenylene benzoxazole (PBO) fibers, inorganic fibers such as silicon carbide fibers, carbon fibers, and the like are used. Carbon fibers are preferred from the viewpoint of a balance between specific strength, specific rigidity, and lightness, and among them, polyacrylonitrile (PAN) based carbon fibers are preferably used.

Because of the excellent specific strength and specific rigidity of carbon fibers, molded articles reinforced with carbon fibers have excellent mechanical properties, and thus various studies have been conducted as alternative materials for metal materials.

As a technique for improving the mechanical properties of a fiber reinforced thermoplastic resin molded article, a molded article obtained by blending carbon fibers and a polyarylene sulfide resin (see, for example, Patent Documents 1 and 2) or a fiber reinforced resin composition in which the content of carbon fibers is increased for the purpose of increasing the elastic modulus of a molded article (see, for example, Patent Document 3) has been proposed.

PRIOR ART DOCUMENTS

PATENT DOCUMENTS

Patent Document 1: International Publication No. 2015-064482
Patent Document 2: Japanese Patent No. 6221924
Patent Document 3: International Publication No. 2013-080820

SUMMARY OF THE INVENTION

PROBLEMS TO BE SOLVED BY THE INVENTION

However, since a carbon fiber reinforced resin molded article has a higher oscillation damping property than a metal material, sound and vibration energy may be lost inside the material when the carbon fiber reinforced resin molded article is used for, for example, acoustic equipment or the like. This causes problems in the acoustic properties obtained by using the molded article, such as a lack of sound pressure, a decrease in reverberation sound, and a lack of sound quality in low and high sounds, and the molded article does not have satisfactory acoustic properties as a substitute for metal materials.

The techniques disclosed in Patent Documents 1 to 3 are intended to improve mechanical properties, and molded articles obtained by these techniques have insufficient oscillation-sustaining property and acoustic properties.

In view of the problems in the conventional techniques, an object of the present invention is to provide a fiber reinforced thermoplastic resin molded article having excellent oscillation-sustaining property and acoustic properties.

SOLUTIONS TO THE PROBLEMS

To solve the problems described above, the present invention has the following configurations.

A fiber reinforced thermoplastic resin molded article containing a thermoplastic resin [A] and carbon fibers [B], a content of the thermoplastic resin [A] being 50 to 95 parts by weight and a content of the carbon fibers [B] being 5 to 50 parts by weight per 100 parts by weight of a total of the thermoplastic resin [A] and the carbon fibers [B], the molded article having a bending elastic modulus of 30 GPa or more, an interfacial shear strength between the thermoplastic resin [A] and the carbon fibers [B] being 15 MPa or more, and a logarithmic decrement of the molded article calculated by Formula (1) shown below being less than 3:

$$\text{Logarithmic decrement } \delta = (1/n) \times \ln(\alpha_{(1)}/\alpha_{(1+n)})$$

Formula (1)

where

$\delta$: logarithmic decrement
n: cycle (n = 100)
$\alpha_{(1)}$: maximum amplitude value
$\alpha_{(1+n)}$: an amplitude value of the nth cycle counting from the cycle having the maximum amplitude value

EFFECTS OF THE INVENTION

The fiber reinforced thermoplastic resin molded article of the present invention is excellent in oscillation-sustaining property of the molded article, and the acoustic properties of the molded article are dramatically improved. The fiber reinforced thermoplastic resin molded article of the present invention is extremely useful for various parts and members such as acoustic equipment, electrical and electronic equipment, office automation equipment, home electric appliances, automobile parts, internal members, sports parts, and housings.

BRIEF DESCRIPTION OF THE DRAWINGS

Fig. 1 is a schematic view showing an example of a transverse sectional form of a fiber bundle [H] in the present invention.
Fig. 2 is a schematic view showing an example of a preferred longitudinal sectional form of a molding material of the present invention.
Fig. 3 is a schematic view showing an example of a preferred transverse sectional form of the molding material of the present invention.
Fig. 4 is a schematic view showing an example of a preferred transverse sectional form of the molding material of the present invention.

EMBODIMENTS OF THE INVENTION

The blending amount of carbon fibers [B] in the fiber reinforced thermoplastic resin molded article of the present invention (hereinafter, it may be referred to as "molded article") is 5 parts by weight or more and 50 parts by weight or less per 100 parts by weight of the total of the thermoplastic resin [A] and the carbon fibers [B]. When the content of the carbon fibers [B] is less than 5 parts by weight, the dynamic properties, particularly elastic modulus of the molded article deteriorate. The content of the carbon fibers [B] is preferably 20 parts by weight or more, more preferably 30 parts by weight or more, still more preferably 40 parts by weight or more. When the content of the carbon fibers [B] is more than 50 parts by weight, dispersibility of the carbon fibers [B] in the molded article deteriorates, and dynamic properties, particularly elastic modulus of the molded article tend to decrease. The content of the carbon fibers [B] is preferably 45 parts by weight or less. The blending amount of the thermoplastic resin [A] is 50 parts by weight or more and 95 parts by weight or less per 100 parts by weight of the total of the thermoplastic resin [A] and the carbon fibers [B]. The content of the thermoplastic resin [A] is preferably 55 parts by weight or more. The blending amount of the thermoplastic resin [A] is preferably 80 parts by weight or less, more preferably 70 parts by weight or less, still more preferably 60 parts by weight or less.
The molded article of the present invention has a bending elastic modulus of 30 GPa or more. When sound or vibration is applied to the molded article, oscillations are generated in the molded article by the applied energy. When the elastic modulus of the molded article is 30 GPa or more, the molded article is less likely to be deformed, and the energy loss associated with the deformation is small. Therefore, it is considered that the oscillation-sustaining property in the molded article improves. When the bending elastic modulus of the molded article is less than 30 GPa, the energy loss due to deformation increases, resulting in a poor oscillation-sustaining property. The elastic modulus is preferably 35 GPa or more, more preferably 40 GPa or more, still more preferably 45 GPa or more. On the other hand, the bending elastic modulus of the molded article is preferably 70 GPa or less from the viewpoint of processability of the molded article. The bending elastic modulus of the molded article is preferably 65 GPa or less, more preferably 60 GPa or less. To set the bending elastic modulus of the molded article to such a range, it is preferable to adjust the blending amount of the carbon fibers [B] in the molded article to the above range. The tensile modulus of the carbon fibers [B] to be used is preferably 200 GPa or more.

The bending elastic modulus of the molded article can be obtained by molding an ISO dumbbell test piece mold from a molding material having the same composition as that of the molded article to be measured using an injection molding machine, setting the distance between supporting points to 64 mm using a three-point bending test jig (indenter radius 5 mm) in accordance with ISO 178:2010, Amd. 1:2013, and performing a measurement under a test condition of a test speed of 2 mm/min. As the tester used here, a commercially available common product may be used. For example, "Instron" (registered trademark) Universal Tester Model 5566 (manufactured by Instron) may be used as the tester.

In the molded article of the present invention, the interfacial shear strength between the thermoplastic resin [A] and the carbon fibers [B] is 15 MPa or more. The interfacial shear strength is preferably 17 MPa or more, more preferably 20 MPa or more. On the other hand, the interfacial shear strength is preferably 50 MPa or less. When the interfacial shear strength is more than 50 MPa, fiber breakage tends to occur during injection molding, and the mechanical properties of the molded article tend to deteriorate.

The energy of sound or vibration applied to the molded article propagates through the inside of the molded article and attenuates due to generation of energy loss at a portion having a low elastic modulus, for example, a gap between the thermoplastic resin [A] and the carbon fibers [B]. At this time, when the carbon fibers [B] having a high elastic modulus is contained and the thermoplastic resin [A] and the carbon fibers [B] are firmly adhered to each other, the applied energy can propagate through the carbon fibers [B] having a high elastic modulus, and therefore there is no energy loss, and the energy can efficiently propagate inside the thermoplastic resin molded article. Therefore, it is considered that the oscillation-sustaining property of the molded article can be improved and the acoustic properties of the molded article can be improved. When the interfacial shear strength is less than 15 MPa, the energy applied to the molded article is lost in the gap between the thermoplastic resin molded article [A] and the carbon fibers [B], resulting in a poor oscillation-sustaining property, which is not preferred.

Here, the interfacial shear strength between the thermoplastic resin [A] and the carbon fibers [B] can be measured by the following method. Using the same thermoplastic resin [A] and the same carbon fibers [B] as those constituting the molded article, the interfacial shear strength between the thermoplastic resin [A] and the carbon fibers [B] is determined as a model. A carbon fiber single yarn of the carbon fibers [B] is lowered from above the thermoplastic resin [A] heated on a heater, and one end of the carbon fiber is embedded in the resin such that the fiber becomes straight. At this time, a fiber embedding depth in the linear direction is defined as H. The embedding depth is preferably 100 to 3000 $\mu$m. The heating temperature is the same as the molding temperature at the time of obtaining the molded article. After the resin in which the carbon fiber single yarn is embedded is cooled to room temperature, the other end of the carbon fiber single yarn that is not embedded in the resin is fixed to a tensile tester, and the carbon fiber single yarn is pulled out at a speed of 0.1 to 100 $\mu$m/sec in the linear direction of the fiber and the direction in which the fiber can be pulled out, and the maximum load F at the pulling is obtained.

An interfacial shear strength $\tau$ (MPa) can be obtained by dividing the maximum load F (N) by the product of the embedding depth H ($\mu$m) and the fiber circumferential length ($\pi \cdot df$ ($\mu$m)) based on the following Formula (2).

$$\tau = F/(\pi \cdot df \cdot H) \times 10^{-6} \ldots \text{Formula (2)}$$

Here, n represents the circumference ratio, and df represents the fiber diameter. The fiber diameter df can be calculated using an average of fiber diameters of randomly selected three or more points obtained by observing the fiber before the tensile measurement with an optical microscope (200 to 1000 magnifications). Examples of the method for setting the interfacial shear strength within the above range include a method of adjusting the amount and type of the surface treatment agent attached to the surface of the carbon fibers [B] and a method of adding a compound having high affinity with the carbon fibers [B] to the thermoplastic resin [A]. As the surface treatment agent (so-called sizing agent) of the carbon fibers [B], those described later can be used.

Further, the molded article of the present invention has a logarithmic decrement represented by the following Formula (1) of less than 3. The logarithmic decrement is a numerical value obtained by taking a natural logarithm of an amplitude ratio over n cycles in a free damped oscillation waveform obtained when sound energy is applied to the inside of the molded article. In the present invention, the logarithmic decrement of the amplitude value at the 100th cycle counting from the cycle having the maximum amplitude value with respect to the maximum amplitude value is obtained using the following Formula (1) for obtaining the logarithmic decrement, and the numerical value thereof is defined as the logarithmic decrement in the present invention.

For the logarithmic decrement of the molded article, a test piece of 12.7 mm × 170 mm × 1 mmt is molded from a molding material having the same composition as that of the molded article to be measured using an injection molding machine, the test piece is subjected to a test by a one-end fixed striking method in accordance with JIS G 0602:1993 "Oscillation Damping Property Test Method for Damping Steel Sheet", and a free oscillation waveform with a horizontal axis representing time and a vertical axis representing displacements is obtained. Thereafter, the logarithmic decrement is calculated from the obtained free oscillation waveform using the following Formula (1), and the logarithmic decrement can be calculated with the cycle n as the 100th cycle. As the tester used here, a commercially available common product may be used.

$$\text{Logarithmic decrement } \delta = (1/n) \times \ln(\alpha_{(1)}/\alpha_{(1+n)})$$

Formula (1)

$\delta$: logarithmic decrement
n: cycle (n = 100)
$\alpha_{(1)}$: maximum amplitude value
$\alpha_{(1+n)}$: an amplitude value of the nth cycle counting from the cycle having the maximum amplitude value

Setting the logarithmic decrement to less than 3 can suppress the oscillation damping property of the molded article and can create a situation in which the energy applied to the molded article is less likely to be lost, leading to an improvement in the acoustic properties. For example, when sound is added to the molded article, energy loss of sound or vibration inside the molded article is small, sound coming out from the molded article can reverberate longer, and therefore sound closer to a metal material can be exhibited. When the logarithmic decrement is more than 3, the oscillation damping property of the molded article increases, and the energy loss of sound or vibration inside the molded article increases, resulting in poor acoustic properties. The logarithmic decrement is preferably less than 2.5, and more preferably less than 2. On the other hand, when the logarithmic decrement is 0, theoretically, the molded article continues to vibrate, that is, sound in the molded article is not attenuated, which is not preferred. The logarithmic decrement is preferably 0.1 or more, more preferably 0.3 or more, still more preferably 0.5 or more.

To control the logarithmic decrement within the above range, it is important to set the bending elastic modulus of the molded article and the interfacial shear strength between the thermoplastic resin [A] and the carbon fibers [B] within the above ranges. Increasing the bending elastic modulus of the molded article and the interfacial shear strength between the thermoplastic resin [A] and the carbon fibers [B] can reduce the loss of energy of sound and vibration applied to the molded article and can reduce the logarithmic decrement.

In the molded article of the present invention, the weight-average fiber length [$L_w$] of the carbon fibers [B] present inside the molded article is preferably more than 0.5 and 10 mm or less. As described above, when an energy of sound or vibration is applied to the molded article, in a case where the thermoplastic resin [A] and the carbon fibers [B] have sufficient interfacial shear strength, the energy passing inside the molded article propagates via the carbon fibers [B]. At this time, the longer the carbon fibers [B] remaining in the molded article, the longer the distance over which the energy passes through the carbon fibers [B], and therefore the energy loss can be suppressed. Therefore, it is considered that the energy applied to the molded article can pass through a portion having a smaller loss, so that the logarithmic decrement can decrease, and the oscillation-sustaining property of the molded article improves.

In the molded article of the present invention, when the weight-average fiber length [$L_w$] of the carbon fibers [B] is less than 0.5 mm, the energy propagation distance of the carbon fibers [B] in the molded article decreases, and therefore the oscillation-sustaining property decreases. In addition, since the effect of improving the mechanical properties by containing the carbon fibers [B] decreases, the acoustic properties deteriorate. When $L_w$ is more than 0.5 mm, a decrease in the oscillation-sustaining property of the molded article can be suppressed. $L_w$ is preferably 0.6 mm or more, more preferably 0.8 mm or more, still more preferably 1.0 mm or more. Setting the $L_w$ of the carbon fibers [B] to 10 mm or less improves the effect of suppressing entanglement between single yarns of the carbon fibers [B] and suppresses deterioration in dispersibility, leading to a suppression of decrease in oscillation-sustaining property of the molded article. $L_w$ is preferably 7 mm or less, more preferably 5 mm or less, still more preferably 2 mm or less. When $L_w$ is more than 10 mm, a carbon fiber pattern on the surface of the molded article tends to appear remarkably, which may lead to poor appearance.

Here, the term "weight-average fiber length" of the carbon fibers [B] in the present invention refers to an average fiber length calculated from the following formula in consideration of the contribution of the fiber length, not simply taking the number average by applying the method for calculating the weight-average molecular weight to the calculation of the fiber length. Note that the following formula is applied when the fiber diameter and density of the carbon fibers [B] are constant.

$$\text{Weight-average fiber length} = \Sigma(Mi^2 \times Ni)/\Sigma(Mi \times Ni)$$

Mi: Fiber length (mm)
Ni: Number of carbon fibers having the fiber length Mi.

The weight-average fiber length can be measured by the following method. The molded article is heated while being sandwiched between glass plates on a hot stage set at 200 to 350°C to form a film in the molded article, and the carbon fibers [B] are uniformly dispersed. The film in which the carbon fibers [B] are uniformly dispersed is observed with an optical microscope (50 to 200 magnifications). The fiber lengths of randomly selected 1000 carbon fibers [B] are measured, and the weight-average fiber length $[L_w]$ is calculated from the above formula.

The weight-average fiber length $[L_w]$ of the carbon fibers [B] in the molded article can be adjusted by, for example, molding conditions. Examples of the molding conditions include pressure conditions such as back pressure, time conditions such as injection time, and temperature conditions such as cylinder temperature and mold temperature in the case of injection molding. By increasing the pressure conditions such as the back pressure, the shearing force in the cylinder is increased, and therefore the fibers are broken and shortened. The shearing force at the time of injection is also increased by shortening injection time, and therefore the fiber length is shortened. Furthermore, as for the temperature conditions, when the temperature is lowered, the resin viscosity is increased and the shearing force is increased, and therefore the fiber length is shortened. Appropriately changing the conditions as described above can set the weight-average fiber length $[L_w]$ of the carbon fibers [B] in the molded article within a desired range.

Next, the components of the molded article of the present invention will be described in detail.

The thermoplastic resin [A] preferably has a molding temperature (melting temperature) of 200 to 450°C. Specific examples thereof include polyolefin resins, polystyrene resins, polyamide resins, vinyl halide resins, polyacetal resins, saturated polyester resins, polycarbonate resins, polyaryl sulfone resins, polyaryl ketone resins, polyarylene ether resins, polyarylene sulfide resins, polyaryl ether ketone resins, polyether sulfone resins, polyarylene sulfide sulfone resins, polyarylate resins, liquid crystal polyesters, and fluorine resins. Each of them corresponds to an electrical insulator. Two or more of them can also be used. The end groups of these resins may be sealed or modified.

Among the thermoplastic resins, at least one resin selected from the group consisting of a polycarbonate resin, a polyolefin resin, a polyamide resin, and a polyarylene sulfide resin, which is lightweight and excellent in balance of dynamic properties and moldability, is more preferred when used for applications of electric and electronic devices and automobile parts.

As the polyolefin resin, a polypropylene resin is preferred. The polypropylene resin may be unmodified one or modified one.

Specific examples of the unmodified polypropylene resin include homopolymers of propylene, and copolymers of propylene with at least one α-olefin, a conjugated diene, a non-conjugated diene, other thermoplastic monomers, and the like. Examples of the α-olefin include α-olefins having 2 to 12 carbon atoms other than propylene, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, and 1-dodecene. Examples of the conjugated diene and the non-conjugated diene include butadiene, ethylidenenorbornene, dicyclopentadiene, and 1,5-hexadiene. Two or more of them may be used. A homopolymer of propylene is preferred from the viewpoint of improving the rigidity of the molded article, and a random or block copolymer of propylene with at least one α-olefin, a conjugated diene, a non-conjugated diene or the like is preferred from the viewpoint of further improving the mechanical properties of the molded article.

As the modified polypropylene resin, an acid-modified polypropylene resin is preferred, and an acid-modified polypropylene resin having a group of a carboxylic acid and/or a salt thereof bonded to a polymer chain is more preferred. The acid-modified polypropylene resin can be obtained by various methods, and can be obtained, for example, by graft-polymerizing a monomer having a carboxylic acid group or a salt or an esterified product thereof to an unmodified polypropylene resin.

Here, examples of the monomer having a carboxylic acid group include ethylene-based unsaturated carboxylic acids, anhydrides thereof, and esterified products thereof. Further, the examples thereof include compounds having an unsaturated vinyl group other than olefin.

Examples of the ethylene-based unsaturated carboxylic acid include (meth)acrylic acid, maleic acid, fumaric acid, tetrahydrophthalic acid, itaconic acid, citraconic acid, crotonic acid, and isocrotonic acid, and examples of the anhydride thereof include nadic acid TM (endosis-bicyclo[2.2.1]hept-5-ene-2,3-dicarboxylic acid), maleic anhydride, and citraconic anhydride.

Two or more of them can also be used. Among them, acid anhydrides of ethylene-based unsaturated carboxylic acids are preferred, and maleic anhydride is more preferred.

Here, to improve the dynamic properties of the molded article, it is preferable to use both the unmodified polypropylene resin and the modified polypropylene resin. In particular, from the viewpoint of the balance between flame retardancy and dynamic properties, it is preferable to use the unmodified polypropylene resin and the modified polypropylene resin to have a weight ratio of 95/5 to 75/25. The weight ratio is more preferably 95/5 to 80/20, still more preferably 90/10 to 80/20.

In the present invention, the polyamide resin is a resin obtained by using an amino acid, a lactam, or a diamine and a dicarboxylic acid as main raw materials. Examples of the main raw material include: amino acids such as 6-aminocaproic acid, 11-aminoundecanoic acid, 12-aminododecanoic acid, and para-aminomethylbenzoic acid; lactams such as ε-caprolactam and ω-laurolactam; aliphatic diamines such as tetramethylenediamine, hexamethylenediamine, 2-methylpentamethylenediamine, nonamethylenediamine, undecamethylenediamine, and dodecamethylenediamine; aromatic diamines such as metaxylylenediamine and para-xylylenediamine; alicyclic diamines such as 1,3-bis(aminomethyl) cyclohexane and 1,4-bis(aminomethyl) cyclohexane; aliphatic dicarboxylic acids such as adipic acid, suberic acid, azelaic acid, sebacic acid, and dodecanedioic acid; aromatic dicarboxylic acids such as terephthalic acid and isophthalic acid; and alicyclic dicarboxylic acids such as 1,4-cyclohexanedicarboxylic acid, 1,3-cyclohexanedicarboxylic acid, and 1,2-cyclohexanedicarboxylic acid. Two or more of them may be used.

A polyamide resin having a melting point of 200°C or more is particularly useful from the viewpoint of excellent heat resistance and strength. Specific examples thereof include polycaproamide (nylon 6), polyhexamethylene adipamide (nylon 66), polycaproamide/polyhexamethylene adipamide copolymer (nylon 6/66), polytetramethylene adipamide (nylon 46), polyhexamethylene sebacamide (nylon 610), polyhexamethylene dodecamide (nylon 612), polyhexamethylene terephthalamide/polycaproamide copolymer (nylon 6T/6), polyhexamethylene adipamide/polyhexamethylene terephthalamide copolymer (nylon 66/6T), polylaurylamide/polyhexamethylene terephthalamide copolymer (nylon 12/6T), polyhexamethylene adipamide/polyhexamethylene isophthalamide copolymer (nylon 66/6I), polyhexamethylene adipamide/polyhexamethylene terephthalamide/polyhexamethylene isophthalamide copolymer (nylon 66/6T/6I), polyhexamethylene adipamide/polyhexamethylene isophthalamide/polycaproamide copolymer (nylon 66/6I/6), polyhexamethylene terephthalamide/polyhexamethylene isophthalamide copolymer (nylon 6T/6I), polyhexamethylene terephthalamide/polydodecaneamide copolymer (nylon 6T/12), polyhexamethylene terephthalamide/poly(2-methylpentamethylene) terephthalamide copolymer (nylon 6T/M5T), polymethaxylylene adipamide (nylon MXD6), polynonamethylene terephthalamide (nylon 9T), and copolymers thereof. Two or more of them may be used.

The polymerization degree of the polyamide resin is not particularly limited, and a sulfuric acid relative viscosity $\eta_r$ of a solution obtained by dissolving 0.25 g of the polyamide resin in 25 ml of 98% concentrated sulfuric acid measured at 25°C is preferably in the range of 1.5 to 5.0, and more preferably in the range of 2.0 to 3.5 since excellent fluidity during molding and a thin-walled molded article can be easily obtained. Here, the sulfuric acid relative viscosity $\eta_r$ is represented by a viscosity ratio (ratio of the number of seconds for falling) of a sample solution to 98% sulfuric acid from a falling speed measured using an Ostwald viscometer in a thermostatic bath at 25°C for a 98% sulfuric acid solution having a resin concentration of 1 g/100 ml.

In the present invention, the polycarbonate resin is obtained by reacting a dihydric phenol with a carbonate precursor. It may be a copolymer obtained using two or more kinds of dihydric phenols or two or more kinds of carbonate precursors. Examples of the reaction method include interfacial polymerization, melt transesterification, solid phase transesterification of a carbonate prepolymer, and ring-opening polymerization of a cyclic carbonate compound.

Examples of the dihydric phenol include 1,1-bis(4-hydroxyphenyl)-3,3,5-trimethylcyclohexane, bis(4-hydroxyphenyl)alkane (such as bisphenol A), 2,2-bis{(4-hydroxy-3-methyl)phenyl}propane, α,α'-bis(4-hydroxyphenyl)-m-diisopropylbenzene, and 9,9-bis(4-hydroxy-3-methylphenyl)fluorene. Two or more of them may be used. Among them, bisphenol A is preferred, and a polycarbonate resin having more excellent impact strength can be obtained. On the other hand, a copolymer obtained using bisphenol A and another dihydric phenol is excellent in terms of high heat resistance or low water absorption.

Examples of the carbonate precursor include carbonyl halides, carbonic acid diesters, and haloformates. Specific examples thereof include phosgene, diphenyl carbonate, and dihaloformate of dihydric phenol.

In producing the polycarbonate resin from the dihydric phenol and the carbonate precursor, a catalyst, a terminator, an antioxidant that prevents oxidation of the dihydric phenol, and the like may be used as necessary.

The polycarbonate resin may be a branched polycarbonate resin obtained by copolymerizing a trifunctional or higher polyfunctional aromatic compound, a polyester carbonate resin obtained by copolymerizing an aromatic or aliphatic (including alicyclic) difunctional carboxylic acid, a copolymerized polycarbonate resin obtained by copolymerizing a difunctional alcohol (including alicyclic), or a polyester carbonate resin obtained by copolymerizing both the difunctional carboxylic acid and the difunctional alcohol. Two or more of these polycarbonate resins may be used.

The molecular weight of the polycarbonate resin is not specified, and is preferably 10,000 to 50,000 in terms of viscosity average molecular weight. When the viscosity average molecular weight is 10,000 or more, the strength of the molded article can further improve. The viscosity average molecular weight is more preferably 15,000 or more, still more preferably 18,000 or more. On the other hand, when the viscosity average molecular weight is 50,000 or less, molding processability improves. The viscosity average molecular weight is more preferably 40,000 or less, still more preferably 30,000 or less. When two or more polycarbonate resins are used, it is preferable that at least one of the polycarbonate resins have a viscosity average molecular weight within the range described above. In this case, a polycarbonate resin having a viscosity average molecular weight of more than 50,000, preferably more than 80,000 is preferably used as the other polycarbonate resin. Such a polycarbonate resin has a high entropy elasticity, and thus is advantageous when molding such as gas-assisted molding is used in combination, and exhibits properties derived from the high entropy elasticity (anti-drip properties, drawdown properties, and properties of improving melt properties such as improved jetting).

The viscosity average molecular weight (M) of the polycarbonate resin is determined by inserting a specific viscosity ($\eta$sp) determined at 20°C from a solution obtained by dissolving 0.7 g of the polycarbonate resin in 100 ml of methylene chloride into the following formula.

$$\eta sp/c = [\eta] + 0.45 \times [\eta]^2 c \text{ (where } [\eta] \text{ is the limiting viscosity)}$$

$$[\eta] = 1.23 \times 10^{-4} M^{0.83}$$

$$c = 0.7$$

The melt viscosity of the polycarbonate resin is not specified, and the melt viscosity at 200°C is preferably 10 to 25000 Pa·s. When the melt viscosity at 200°C is 10 Pa·s or more, the strength of the molded article can further improve. The melt viscosity is more preferably 20 Pa·s or more, still more preferably 50 Pa·s or more. On the other hand, when the melt viscosity at 200°C is 25,000 Pa·s or less, molding processability improves. The melt viscosity is more preferably 20,000 Pa·s or less, still more preferably 15,000 Pa·s or less.

As the polycarbonate resin, one put on the market as "Iupilon" (registered trademark), "NOVAREX" (registered trademark) manufactured by Mitsubishi Engineering-Plastics Corporation, "Panlite" (registered trademark) manufactured by Teijin Chemicals Limited, "TARFLON" (registered trademark) manufactured by Idemitsu Petrochemical Co., Ltd or the like can also be used.

In the present invention, examples of the polyarylene sulfide resin include a polyphenylene sulfide (PPS) resin, a polyphenylene sulfide sulfone resin, a polyphenylene sulfide ketone resin, and random or block copolymers thereof. Two or more of them may be used. In particular, a polyphenylene sulfide resin is particularly preferably used.

The polyarylene sulfide resin can be produced by any method such as, for example, a method for obtaining a polymer having a relatively small molecular weight described in Japanese Examined Patent Publication No. S45-3368 or a method for obtaining a polymer having a relatively large molecular weight described in Japanese Examined Patent Publication No. S52-12240 or Japanese Patent Laid-open Publication No. S61-7332.

The obtained polyarylene sulfide resin may be subjected to various treatments such as crosslinking/polymerization by heating in air, heat treatment under an inert gas atmosphere such as nitrogen or under reduced pressure, washing with an organic solvent, hot water, an acid aqueous solution, or the like, and activation with a functional group-containing compound such as an acid anhydride, an amine, an isocyanate, or a functional group-containing disulfide compound.

The melt viscosity of the polyarylene sulfide resin is preferably 80 Pa·s or less and more preferably 20 Pa·s or less under conditions of 310°C and a shear rate of 1000/sec. The lower limit is not particularly limited, and is preferably 5 Pa·s or more. Two or more kinds of polyarylene sulfide resins having different melt viscosities may be used in combination. The melt viscosity can be measured using a capilograph (manufactured by Toyo Seiki Co., Ltd.) under the conditions of a die length of 10 mm and a die hole diameter of 0.5 to 1.0 mm.

As the polyarylene sulfide resin, polyphenylene sulfide resins put on the market as "TORELINA" (registered trademark) manufactured by Toray Industries, Inc., "DIC.PPS" (registered trademark) manufactured by DIC Corporation, "DURAFIDE" (registered trademark) manufactured by Polyplastics Co., Ltd., and the like can also be used.

The carbon fibers [B] can improve the dynamic properties of the molded article by the fiber reinforcing effect on the thermoplastic resin [A]. Furthermore, when carbon fibers excellent in electrical conductivity, thermal conductivity, and the like are used, these properties can be imparted to the molded article. Carbon fibers such as PAN-based, pitch-based, and rayon-based carbon fibers are preferred from the viewpoint of an effect of improving dynamic properties and reducing the weight of the molded article, and PAN-based carbon fibers are more preferred from the viewpoint of a balance between the strength and elastic modulus of the molded article to be obtained. In addition, for the purpose of imparting conductivity, carbon fibers coated with a metal such as nickel, copper, or ytterbium are also preferably used.

The carbon fibers [B] preferably have a tensile modulus of 250 GPa or more, more preferably 290 GPa or more, still more preferably 350 GPa or more. When the tensile modulus is 250 GPa or more, the acoustic properties of the molded article tend to improve. The upper limit of the tensile modulus is not particularly limited, and is preferably 650 GPa or less so that the weight-average fiber length in the molded article does not become too short. The tensile modulus of the carbon fibers [B] can be evaluated by the resin-impregnated strand test method of JIS R7608:2004. To control the tensile modulus of the carbon fibers [B], the carbonization temperature and the stretch ratio at the time of producing the carbon fibers may be adjusted.

The average fiber diameter of the carbon fibers [B] is not particularly limited, and is preferably 6 to 20 $\mu$m, more preferably 6 to 15 $\mu$m, still more preferably 6 to 12 $\mu$m from the viewpoint of dynamic properties and surface appearance of the molded article. The average fiber diameter referred to herein is an average fiber diameter of single fibers. The number of single fibers in the form of a carbon fiber bundle is not particularly limited, and is preferably 20,000 to 350,000, and more preferably 20,000 to 100,000 from the viewpoint of productivity.

The carbon fibers [B] may be surface-treated for the purpose of, for example, improving adhesion between the carbon fibers [B] and the thermoplastic resin [A] as a matrix resin. Examples of the surface treatment method include electrolytic treatment, ozone treatment, and ultraviolet treatment.

The carbon fibers [B] may be coated with a sizing agent for the purpose of preventing fluffing of the carbon fibers [B] or improving adhesion between the carbon fibers [B] and the thermoplastic resin [A] as a matrix resin. When a sizing agent is added to the carbon fibers [B], surface properties such as functional groups on the surface of the carbon fibers can improve, and adhesiveness and composite overall properties can improve.

Examples of the sizing agent include epoxy resins, phenolic resins, polyethylene glycol, polyurethanes, polyesters, emulsifiers, and surfactants. Two or more of them may be used. The sizing agent is preferably watersoluble or water-dispersible. An epoxy resin having excellent wettability with the carbon fibers [B] is preferred, and a polyfunctional epoxy resin is more preferred.

Examples of the polyfunctional epoxy resin include a bisphenol A epoxy resin, a bisphenol F epoxy resin, an aliphatic epoxy resin, and a phenol novolac epoxy resin. In particular, an aliphatic epoxy resin that easily exhibits adhesiveness with a matrix resin is preferred. Since aliphatic epoxy resins have flexible skeletons, they tend to have a structure with high toughness even at a high crosslink density. When an aliphatic epoxy resin is present between the carbon fibers and the matrix resin, the carbon fibers and the matrix resin are made soft and difficult to be peeled off, and therefore the strength of the molded article can be further improved.

Examples of the polyfunctional aliphatic epoxy resin include a diglycidyl ether compound and a polyglycidyl ether compound. Examples of the diglycidyl ether compound include ethylene glycol diglycidyl ether, polyethylene glycol diglycidyl ethers, propylene glycol diglycidyl ether, polypropylene glycol diglycidyl ethers, 1,4-butanediol diglycidyl ether, neopentyl glycol diglycidyl ether, polytetramethylene glycol diglycidyl ethers, and polyalkylene glycol diglycidyl ethers. Examples of the polyglycidyl ether compound include glycerol polyglycidyl ether, diglycerol polyglycidyl ether, polyglycerol polyglycidyl ethers, sorbitol polyglycidyl ethers, arabitol polyglycidyl ethers, trimethylolpropane polyglycidyl ethers, trimethylolpropane glycidyl ethers, pentaerythritol polyglycidyl ethers, and polyglycidyl ethers of aliphatic polyhydric alcohols.

Among the aliphatic epoxy resins, a tri- or higher functional aliphatic epoxy resin is preferred, and an aliphatic polyglycidyl ether compound having three or more highly reactive glycidyl groups is more preferred. The aliphatic polyglycidyl ether compound has a good balance of flexibility, crosslinking density, and compatibility with the matrix resin, and can further improve adhesiveness. Among them, glycerol polyglycidyl ether, diglycerol polyglycidyl ether, polyglycerol polyglycidyl ethers, polyethylene glycol glycidyl ethers, and polypropylene glycol glycidyl ethers are further preferred.

The adhesion amount of the sizing agent is preferably 0.01 to 10 wt% in 100 wt% of the carbon fiber bundle containing the sizing agent and the carbon fibers [B]. When the sizing agent adhesion amount is 0.01 wt% or more, adhesiveness to the thermoplastic resin [A] can further improve. The sizing agent adhesion amount is more preferably 0.05 wt% or more, still more preferably 0.1 wt% or more. On the other hand, when the sizing agent adhesion amount is 10 wt% or less, the physical properties of the thermoplastic resin [A] can be maintained at a higher level. The sizing agent adhesion amount is more preferably 5 wt% or less, still more preferably 2 wt% or less.

The means for applying the sizing agent is not particularly limited, and examples thereof include a method of preparing a sizing treatment liquid obtained by dissolving (including dispersion) the sizing agent in a solvent (including a dispersion medium in the case of dispersing), applying the sizing treatment liquid to the carbon fibers [B], and then drying and vaporizing the solvent to remove the solvent. Examples of the method for applying the sizing treatment liquid to the carbon fibers [B] include a method in which the carbon fibers [B] are immersed in the sizing treatment liquid via a roller, a method in which the carbon fibers [B] are brought into contact with a roller to which the sizing treatment liquid is attached, and a method in which the sizing treatment liquid is atomized and sprayed onto the carbon fibers [B]. Either a batch type or a continuous type may be used, but the continuous type is preferred because the productivity is good and the variation can be reduced. At this time, it is preferable to adjust the concentration of the sizing treatment liquid, the temperature, the thread tension, and the like so that the adhesion amount of the sizing agent to the carbon fibers [B] is uniform within an appropriate range. In addition, it is more preferable to ultrasonically vibrate the carbon fibers [B] at the time of applying the sizing treatment liquid.

The molded article of the present invention can further contain a compound [C] having a reactive functional group. The compound [C] can react with the thermoplastic resin [A] by having a reactive functional group. Here, the reactive functional group is preferably at least one functional group selected from a carboxy group, a hydroxy group, an epoxy group, an amino group, an oxazoline group, an isocyanate group, and a carbodiimide group.

The compound having a carboxy group is not particularly limited, and examples thereof include a compound obtained by a method of copolymerizing a vinyl-based monomer having a carboxy group or a carboxy group anhydride, such as acrylic acid, methacrylic acid, maleic acid, maleic acid monoethyl ester, maleic anhydride, phthalic acid, and itaconic acid, a method of copolymerizing using a polymerization initiator having a carboxy group, such as $\gamma,\gamma'$-azobis($\gamma$-cyanovaleic acid), $\alpha,\alpha'$-azobis($\alpha$-cyanoethyl)-p-benzoic acid, and succinic peroxide, and/or a polymerization degree adjusting agent having a carboxy group, such as thioglycolic acid, $\alpha$-mercaptopropionic acid, $\beta$-mercaptopropionic acid, $\alpha$-mercapto-isobutyric acid, or 2, 3 or 4-mercaptobenzoic acid, and a method in which a copolymer of a (meth)acrylic acid ester-based monomer such as methyl methacrylate or methyl acrylate and a predetermined vinyl-based monomer is saponified with an alkali.

The compound having a hydroxy group is not particularly limited, and examples thereof include a compound obtained by a method of copolymerizing a vinyl-based monomer having a hydroxyl group such as 2-hydroxyethyl acrylate, 2-hydroxyethyl methacrylate, 3-hydroxypropyl acrylate, 3-hydroxypropyl methacrylate, 2,3,4,5,6-pentahydroxyhexyl acrylate, 2,3,4,5,6-pentahydroxyhexyl methacrylate, 2,3,4,5-tetrahydroxypentyl acrylate, 2,3,4,5-tetrahydroxypentyl methacrylate, 3-hydroxy-1-propene, 4-hydroxy-1-butene, cis-4-hydroxy-2-butene, trans-4-hydroxy-2-butene, 3-hydroxy-2-methyl-1-propene, cis-5-hydroxy-2-pentene, trans-5-hydroxy-2-pentene, or 4,4-dihydroxy-2-butene, and a compound having a hydroxyl group such as polyethylene glycol.

The compound having an epoxy group is not particularly limited, and examples thereof include a compound obtained by a method of copolymerizing a monomer having an epoxy group such as glycidyl acrylate, glycidyl methacrylate, glycidyl ethacrylate, glycidyl itaconate, allyl glycidyl ether, styrene-p-glycidyl ether, or p-glycidylstyrene, and an epoxy resin. Among them, a glycidyl ether substituted with an alkyl group and the like are excellent in reactivity with a dendritic polyester, and thus can be preferably used because dispersibility can be effectively improved.

The compound having an amino group is not particularly limited, and examples thereof include a compound obtained by a method of copolymerizing a monomer having an amino group such as acrylamide, methacrylamide, N-methylacrylamide, butoxymethylacrylamide, N-propylmethacrylamide, aminoethyl acrylate, propylaminoethyl acrylate, dimethylaminoethyl methacrylate, ethylaminopropyl methacrylate, phenylaminoethyl methacrylate, cyclohexylaminoethyl methacrylate, N-vinyldiethylamine, N-acetylvinylamine, allylamine, methallylamine, N-methylallylamine, or p-aminostyrene and a derivative thereof.

The compound having an oxazoline group is not particularly limited, and examples thereof include a compound obtained by a method of copolymerizing a monomer having an oxazoline group such as 2-isopropenyl-oxazoline, 2-vinyl-oxazoline, 2-acryl-oxazoline, or 2-styryl-oxazoline.

The compound having an isocyanate group is not particularly limited, and examples thereof include a compound obtained by a method of copolymerizing monomers having various functional groups as described above, and an organic compound modified with a monomer having a functional group. Examples of the compound having an isocyanate group include 4,4'-diphenylmethane diisocyanate (hereinafter abbreviated as MDI), 2,4-tolylene diisocyanate, isomers thereof or a mixture of isomers thereof, and polyisocyanates such as hexamethylene diisocyanate, isophorone diisocyanate, xylylene diisocyanate, tetramethylxylylene diisocyanate, hydrogenated xylylene diisocyanate, 4,4'-dicyclohexylmethane diisocyanate, tolidine diisocyanate, naphthalene diisocyanate, and triphenylmethane triisocyanate, and one or two or more thereof can be used.

Examples of the compound having a carbodiimide group, that is, a carbodiimide compound includes polycarbodiimide, and examples thereof include aliphatic polycarbodiimide and aromatic polycarbodiimide. From the viewpoint of affinity and reactivity between the thermoplastic resin [A] and the carbon fibers [B], aliphatic polycarbodiimide is preferably used.

The aliphatic polycarbodiimide compound is a homopolymer or copolymer having a repeating unit represented by the general formula $-N=C=N-R^3-$ (wherein $R^3$ represents a divalent organic group of an alicyclic compound such as cyclohexylene, or a divalent organic group of an aliphatic compound such as methylene, ethylene, propylene, or methylethylene) as a main constituent unit, and preferably containing 70 mol% or more, more preferably 90 mol% or more, and still more preferably 95 mol% or more of the repeating unit.

As the compound [C], polycarbodiimide is preferably used from the viewpoint of interfacial adhesion between the thermoplastic resin [A] and the carbon fibers [B].

The addition amount of the compound [C] is preferably in the range of 0.1 to 10 parts by weight, more preferably in the range of 0.5 to 8 parts by weight, and still more preferably in the range of 1 to 5 parts by weight per 100 parts by weight of the total of the components [A], [B] and [C]. When the addition amount is 0.1 parts by weight or more, the adhesiveness between the thermoplastic resin [A] and the carbon fibers [B] can improve, the interfacial shear strength can improve, and further the oscillation-sustaining property can improve. The addition amount is preferably 10 parts by weight or less because the retention stability of the resin composition can be maintained.

The compound [C] in the present invention is appropriately selected according to the combination with the thermoplastic resin [A] which is a matrix resin. For example, when the thermoplastic resin [A] is a polypropylene resin, the compound [C] is preferably a compound having a carboxy group. When the thermoplastic resin [A] is a polycarbonate resin, the compound [C] is preferably a compound having an epoxy group. When the thermoplastic resin [A] is a polyamide resin, the compound [C] is preferably a compound having an epoxy group or a compound having a carboxy group. When the thermoplastic resin [A] is a polyarylene sulfide resin, the compound [C] is preferably a compound having an isocyanate group or a carbodiimide group.

The molded article of the present invention may contain another component in addition to the components [A], [B] and [C] as long as the object of the present invention is not impaired. Examples of another component include a resin [D] having a melt viscosity at 200°C lower than that of the thermoplastic resin [A], a flame retardant [E], a thermally conductive filler [F], and carbon black [G]. The dispersibility of the carbon fibers [B] can be improved by containing the resin [D]. The flame retardancy of the molded article can be improved by containing the flame retardant [E]. The thermal conductivity of the molded article can be improved by containing the thermally conductive filler [F]. The conductivity and black color tone of the molded article can be further improved by containing the carbon black [G].

The resin [D] is a resin having a melt viscosity at 200°C lower than that of the thermoplastic resin [A]. By containing the resin [D], the dispersibility of the carbon fibers [B] can be further improved at the time of producing a molding material described later or at the time of molding a molded article using the molding material, and the fluidity during molding can be further improved. Accordingly, the oscillation-sustaining property of the molded article can be further improved.

The melt viscosity of the resin [D] at 200°C is preferably 0.01 to 10 Pa·s. When the melt viscosity at 200°C is 0.01 Pa·s or more, breakage starting from the resin [D] can be further suppressed, and the mechanical properties of the molded article can be further improved. The melt viscosity is more preferably 0.05 Pa·s or more, still more preferably 0.1 Pa·s or more. On the other hand, when the melt viscosity at 200°C is 10 Pa·s or less, the dispersibility of the carbon fibers [B] in the resulting molded article can be further improved. The melt viscosity is more preferably 5 Pa·s or less, still more preferably 2 Pa·s or less. Here, the melt viscosity of the resin [D] at 200°C can be measured with a viscoelasticity measuring instrument at 0.5 Hz using a 40 mm parallel plate.

As the resin [D], a resin having high affinity with the thermoplastic resin [A] is preferred. By selecting the resin [D] having high affinity with the thermoplastic resin [A], the resin [D] is efficiently compatible with the thermoplastic resin [A] in the molded article, and therefore the dispersibility of the carbon fibers [B] can be further improved.

The blending amount of the resin [D] is preferably 0.1 to 12 parts by weight per 100 parts by weight of the total of the components [A] to [C]. When the blending amount of the resin [D] is 0.1 parts by weight or more, the dispersibility of the carbon fibers [B] can further improve in the molded article. The blending amount of the resin [D] is more preferably 2 parts by weight or more. On the other hand, when the blending amount of the resin [D] is 12 parts by weight or less, deterioration of dynamic properties of the molded article can be suppressed. The blending amount of the resin [D] is preferably 10 parts by weight or less.

The resin [D] is preferably at least one resin selected from the group consisting of a terpene resin, an epoxy resin, a phenol resin, and cyclic polyphenylene sulfide.

The resin [D] is appropriately selected according to the combination with the thermoplastic resin [A] which is a matrix resin. For example, when the molding temperature is in the range of 150 to 270°C, a terpene resin is suitably used, and when the molding temperature is in the range of 270 to 320°C, an epoxy resin is suitably used. Specifically, when the thermoplastic resin [A] is a polypropylene resin, the resin [D] is preferably a terpene resin. When the thermoplastic resin [A] is a polycarbonate resin or a polyphenylene sulfide resin, the resin [D] is preferably an epoxy resin. When the thermoplastic resin [A] is a polyamide resin, the resin [D] is preferably a terpene phenol resin.

The epoxy resin preferably used as the resin [D] is a compound having two or more epoxy groups, does not substantially contain a curing agent, and does not cure by so-called three-dimensional crosslinking even when heated. It is preferable that the epoxy resin have a glycidyl group because the epoxy resin easily interacts with the carbon fibers [B] and the carbon fibers [B] are easily impregnated with the epoxy resin. In addition, the dispersibility of the carbon fibers [B] during molding processing can be further improved.

Here, examples of the compound having a glycidyl group include a glycidyl ether type epoxy resin, a glycidyl ester type epoxy resin, a glycidyl amine type epoxy resin, and an alicyclic epoxy resin. Two or more of them may be used. In particular, glycidyl ether epoxy resins are preferred, and bisphenol A type epoxy resins and bisphenol F type epoxy resins are more preferred because of excellent balance between viscosity and heat resistance.

The number average molecular weight of the epoxy resin used as the resin [D] is preferably 200 to 5000. When the number average molecular weight of the epoxy resin is 200 or more, the dynamic properties of the molded article can further improve. The number average molecular weight of the epoxy resin is more preferably 800 or more, and further preferably 1000 or more. On the other hand, when the number average molecular weight of the epoxy resin is 5000 or less, the impregnation into the carbon fibers [B] is excellent, and the dispersibility of the carbon fibers [B] can be further improved. The number average molecular weight is more preferably 4000 or less, still more preferably 3000 or less. The number average molecular weight of the epoxy resin can be measured using gel permeation chromatography (GPC).

Examples of the terpene resin include a polymer or copolymer obtained by polymerizing a terpene monomer with an aromatic monomer or the like as necessary in the presence of a Friedel-Crafts type catalyst in an organic solvent.

Examples of the terpene monomer include monocyclic monoterpenes such as α-pinene, β-pinene, dipentene, d-limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, paramentadienes, and carenes. Examples of the aromatic monomer include styrene and α-methylstyrene.

In particular, a terpene monomer selected from α-pinene, β-pinene, dipentene and d-limonene is preferred because of excellent compatibility with the thermoplastic resin [A], and a homopolymer of a terpene monomer selected from them is more preferred. A hydrogenated terpene resin obtained by hydrogenating a terpene resin is preferred because it is more excellent in compatibility with the thermoplastic resin [A], particularly, a polypropylene resin.

The glass transition temperature of the terpene resin is not particularly limited, and is preferably 30 to 100°C. When the glass transition temperature is 30°C or more, the handleability of the resin [D] is excellent during the molding process. When the glass transition temperature is 100°C or less, the fluidity of the resin [D] during molding processing can be moderately suppressed and the moldability can be improved.

The number average molecular weight of the terpene resin is preferably 200 to 5000. When the number average molecular weight is 200 or more, the bending strength and the tensile strength of the molded article can further improve. When the number average molecular weight is 5000 or less, the viscosity of the terpene resin is moderately low, and therefore the impregnation property is excellent, and the dispersibility of the carbon fibers [B] in the molded article can further improve. The number average molecular weight of the terpene resin can be measured using gel permeation chromatography (GPC).

The terpene phenol resin is obtained by reacting a terpene monomer and a phenol with a catalyst. Here, as the phenols, those having 1 to 3 alkyl groups, halogen atoms and/or hydroxyl groups on the benzene ring of phenol are preferably used. Specific examples thereof include cresol, xylenol, ethylphenol, butylphenol, t-butylphenol, nonylphenol, 3,4,5-trimethylphenol, chlorophenol, bromophenol, chlorocresol, hydroquinone, resorcinol, and orcinol. Two or more of them may be used. Among them, phenol and cresol are preferred.

The number average molecular weight of the terpene phenol resin is preferably 200 to 5,000. When the number average molecular weight is 200 or more, the mechanical properties of the molded article can further improve. When the number average molecular weight is 5,000 or less, the viscosity of the terpenephenol resin is moderately low, and therefore the impregnation property is excellent, and the dispersibility of the carbon fibers [B] in the molded article can further improve. The number average molecular weight of the terpene phenol resin can be measured using gel permeation chromatography (GPC).

As described above, the molded article of the present invention can contain a flame retardant [E] from the viewpoint of improving flame retardancy. Examples of the flame retardant include a phosphorus-based flame retardant. The phosphorus-based flame retardant [E] exhibits flame retardancy because a dense char is formed on the surface of the molded article by the dehydration and carbonization promoting action, heat and oxygen are blocked, and the propagation of flame is blocked.

Examples of the phosphorus-based flame retardant [E] include: phosphoric acid ester-based compounds such as triphenyl phosphate, tricresyl phosphate, trimethyl phosphate, triethyl phosphate, cresyl diphenyl phosphate, xylenyl diphenyl phosphate, 2-ethylhexyl diphenyl phosphate, and other aromatic phosphoric acid esters; halogen-containing phosphate ester compounds such as tris-dichloropropyl phosphate, tris-chloroethyl phosphate, and tris-chloropropyl phosphate; condensed phosphoric acid ester compounds; polyphosphates; and red phosphorus compounds. They may be used alone or in combination of two or more thereof. In particular, a condensed phosphoric acid ester compound is preferred from the viewpoint of the balance between heat resistance and flame retardancy.

The blending amount of the phosphorus-based flame retardant [E] is preferably 1 to 15 parts by weight per 100 parts by weight of the total of the components [A] to [C]. When the blending amount is 5 parts by weight or more, the flame retardancy of the molded article is enhanced. The blending amount is preferably 7 parts by weight or more. On the other hand, when the blending amount is 15 parts by weight or less, the dynamic properties of the molded article improve. The blending amount is preferably 10 parts by weight or less.

As the thermally conductive filler [F], a filler having thermal conductivity properties other than the carbon fibers [B] is selected. Examples of the filler shape include non-fibrous shapes such as a plate shape, a scale shape, a granular shape, an irregular shape, and a crushed product. Specific examples thereof include mica, talc, kaolin, silica, calcium carbonate, glass beads, glass flakes, glass microballoons, clay, molybdenum disulfide, wollastonite, polycalcium phosphate, graphite, metal powder, metal flakes, metal ribbons, metal oxides (alumina, zinc oxide, titanium oxide, and the like), carbon powders, graphite, carbon flakes, scaly carbon, and carbon nanotubes. Two or more of them may be contained. Specific examples of the metal constituting the metal powder, the metal flakes, and the metal ribbon include silver, nickel, copper, zinc, aluminum, stainless steel, iron, brass, chromium, and tin.

The blending amount of the thermally conductive filler [F] is preferably 1 to 40 parts by weight per 100 parts by weight of the total of the components [A] to [C]. When the blending amount is 1 part by weight or more, the thermal conductive property of the molded article increases. The blending amount is preferably 10 parts by weight or more. On the other hand, when the blending amount is 40 parts by weight or less, the dynamic properties of the molded article improve. The blending amount is preferably 30 parts by weight or less.

In the molded article of the present invention, carbon black [G] may be blended as long as the object of the present invention is not impaired. When the carbon black [G] is blended, the conductivity further improves. The higher the conductivity, the higher the characteristic of reflecting the electromagnetic wave, and therefore the electromagnetic wave shielding property improves. Since carbon black is also a colorant, the black color tone of the surface of the molded article can be further enhanced, and the appearance quality of the molded article is improved. Examples of the carbon black [G] include furnace black, acetylene black, thermal black, channel black, and Ketjen black. Two or more of them may be contained.

The blending amount of these carbon blacks [G] is preferably 0.1 parts by weight or more and 15 parts by weight or less per 100 parts by weight of the total of the components [A] to [C]. When the blending amount is 0.1 parts by weight or more, the conductivity, electromagnetic wave shielding property, and black color tone of the molded article improve. When the blending amount is 15 parts by weight or less, the occurrence of aggregation due to thickening of the resin composition is suppressed, and a decrease in fluidity is suppressed, and therefore the appearance quality and mechanical properties of the molded article are improved. The blending amount is preferably in the range of 0.5 to 10 parts by weight, and more preferably in the range of 1 to 7 parts by weight.

Next, fiber reinforced thermoplastic resin molding materials (hereinafter, they may be referred to as "molding materials") suitable for obtaining the molded article of the present invention will be described in detail. In the present invention, the term "molding material" means a raw material used when a molded article is obtained using injection molding or the like.

The molding material contains 50 to 95 parts by weight (50 parts by weight or more and 95 parts by weight or less) of the thermoplastic resin [A] and 5 to 50 parts by weight (5 parts by weight or more and 50 parts by weight or less) of the carbon fibers [B] per 100 parts by weight of the total of the thermoplastic resin [A] and the carbon fibers [B].

As the form of the molding material, it is preferable to have a structure in which the outside of the fiber bundle [H] formed by impregnating the carbon fibers [B] with the resin [D] is covered with the thermoplastic resin [A] (or the resin composition containing the thermoplastic resin [A]). In the following description, for the sake of simplicity, the resin composition containing the thermoplastic resin [A] is also simply referred to as the thermoplastic resin [A].

Here, "covered structure" refers to a structure in which the thermoplastic resin [A] is disposed on the surface of the fiber bundle [H] and the thermoplastic resin [A] and the fiber bundle [H] are adhered to each other. The thermoplastic resin [A] may enter a part of the fiber bundle [H] in the vicinity of the boundary between the fiber bundle [H] and the thermoplastic resin [A]. That is, the carbon fibers [B] constituting the fiber bundle [H] may be impregnated with a part of the thermoplastic resin [A] near the boundary, or the thermoplastic resin [A] may be compatible with the resin [D].

As a method of covering the surface of the fiber bundle [H] with the thermoplastic resin [A], a method of disposing the molten thermoplastic resin [A] to bring it into contact with the surface of the fiber bundle [H], and then cooling and solidifying the thermoplastic resin [A] is preferred. Although not particularly limited, more specific examples thereof include a method of disposing the thermoplastic resin [A] in such a manner as to continuously cover the periphery of the fiber bundle [H] using an extruder and a coating die for a wire coating method, and a method of disposing a melted film-shaped thermoplastic resin [A] using an extruder and a T die from one surface or both surfaces of the fiber bundle [H] flattened by a roll or the like and integrating them with a roll or the like.

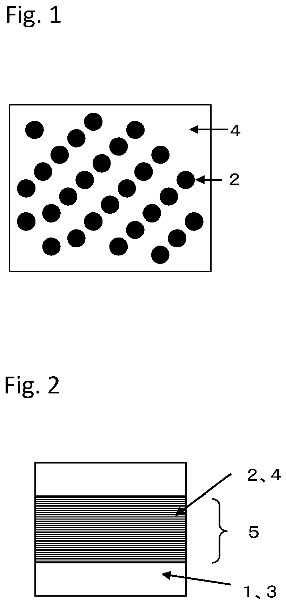

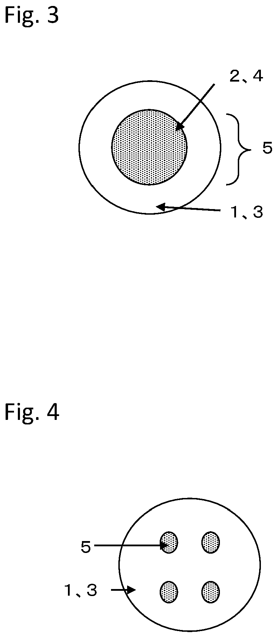

Figs. 2 and 3 are schematic views showing an example of a preferred sectional form of the molding material used in the present invention. Reference sign 1 represents the thermoplastic resin [A], reference sign 2 represents the carbon fibers [B], reference sign 3 represents the compound [C], reference sign 4 represents the resin [D], and reference sign 5 represents the fiber bundle [H].

The sectional form of the molding material is not limited to that shown in the drawings as long as at least a part of the outside of the fiber bundle [H] is covered with the thermoplastic resin [A] or a resin composition containing a resin composition containing the thermoplastic resin [A].

In the section of the molding material, as shown in the longitudinal sectional form of Fig. 2, the fiber bundle [H] 5 as a core material is preferably sandwiched and disposed in layers by a resin composition (1, 3) containing the thermoplastic resin [A]. As shown in the transverse sectional form of Fig. 3, it is also preferable that the fiber bundle [H] 5 be disposed in a core-sheath structure in which the fiber bundle [H] 5 is a core structure and the periphery of the fiber bundle [H] 5 is covered with the resin composition (1, 3) containing the thermoplastic resin [A]. In addition, a configuration in which a plurality of fiber bundles [H] (5) are disposed so as to be covered with the resin composition (1, 3) containing the thermoplastic resin [A] as shown in Fig. 4 is also preferred. In this case, the number of fiber bundles [H] is desirably about 2 to 6. Fig. 1 is a schematic view showing an example of a transverse sectional form of the fiber bundle [H] in the present invention. In the embodiment of Fig. 1, in the fiber bundle [H], the resin [D] is filled between the single fibers of the carbon fibers [B]. That is, the single fibers of the carbon fibers [B] are dispersed like islands in the sea of the resin [D]. Here, the longitudinal section means a section in a plane including the axial direction, and the transverse section means a section in a plane orthogonal to the axial direction. When the molding material has a cylindrical shape such as a pellet, the axial direction refers to the axial center of the cylinder.

In the molding material, it is preferable that the single fibers of the carbon fibers [B] be arranged substantially in parallel in the axial direction (the same direction) of the molding material. The length of the carbon fibers [B] and the length of the molding material are preferably substantially the same.

The phrase "arranged substantially in parallel" as used herein refers to a state in which the axis line of the major axes of the carbon fibers [B] and the axis line of the major axis of the molding material are directed in the same direction. The angle formed by the axes is preferably 20° or less, more preferably 10° or less, and still more preferably 5° or less. The phrase "substantially the same length" means that the carbon fibers [B] are not intentionally cut in the molding material, or the carbon fibers [B] significantly shorter than the entire length of the molding material are not substantially contained. In particular, although the amount of the carbon fibers [B] shorter than the overall length of the molding material is not limited, the content of the carbon fibers [B] having a length of 50% or less of the overall length of the molding material is preferably 30 mass% or less and more preferably 20 mass% or less in the total carbon fibers [B]. When the carbon fibers [B] have substantially the same length as the molding material, the carbon fiber length in the resulting molded article can increase, and the oscillation-sustaining property can further improve. The lengths of the carbon fibers [B] and the molding material are each preferably 14 mm or less and 3 mm or more, more preferably 11 mm or less and 5 mm or more. The molding material is preferably continuous while maintaining substantially the same sectional shape in the longitudinal direction.

Next, a method for producing the molding material will be described.

The method for impregnating the carbon fibers [B] with the resin [D] to obtain the fiber bundle [H] is not particularly limited, and examples thereof include a method including a step (I) of supplying the resin [D] to the carbon fibers [B] and bringing the resin [D] into contact with the carbon fibers [B] in a molten state at 100 to 300°C to attach the resin [D] to the carbon fibers [B], and a step (II) of heating the carbon fibers [B] to which the resin [D] is attached to impregnate the carbon fibers [B] with the resin [D].

In the step (I), the method of supplying the resin [D] and attaching the resin [D] to the carbon fibers [B] is not particularly limited, and for example, a known method used when an oil agent, a sizing agent, or a matrix resin is applied to the carbon fibers [B] can be used. In particular, dipping or coating is preferably used.

Here, dipping refers to a method in which the resin [D] is supplied to a melting bath by a pump, and the carbon fibers [B] are caused to pass through the melting bath. By immersing the carbon fibers [B] in the resin [D] in the melting bath, the resin [D] can be reliably attached to the carbon fibers [B]. The coating refers to, for example, a method of applying the resin [D] to the carbon fibers [B] using a coating means such as reverse roll, forward rotation roll, kiss roll, spray, or curtain. At this time, the resin [D] melted is supplied to a roll by a pump, and a melt of the resin [D] is applied to the carbon fibers [B]. The reverse roll is a method in which two rolls rotate in opposite directions to each other to apply the molten resin [D] onto the rolls, and the forward rotation roll is a method in which two rolls rotate in the same direction to apply the molten resin [D] onto the rolls. Usually, in the reverse roll and the forward rotation roll, a method is used in which the carbon fibers [B] are sandwiched between two rolls, and a roll is further installed to reliably attach the resin [D]. On the other hand, the kiss roll is a method in which the resin [D] is attached only by the carbon fibers [B] being in contact with the roll. Therefore, the kiss roll is preferably used when the viscosity of the resin is relatively low. In any of the roll methods, a predetermined amount of the resin [D] heated and melted is applied, and the carbon fibers [B] are caused to run while being in contact with the resin [D], whereby a predetermined amount of the resin [D] can be attached per unit length of the fibers. The spray uses the principle of atomization, and is a method in which the molten resin [D] is atomized and sprayed onto the carbon fibers [B], and the curtain is a method in which the molten resin [D] is naturally dropped from a small hole and applied, or a method in which the resin [D] is caused to overflows from a melting tank and applied. Since the amount required for coating can be easily adjusted, the loss of the resin [D] can be reduced.

The melting temperature (temperature in the melting bath) at the time of supplying the resin [D] is preferably 100 to 300°C. When the melting temperature is 100°C or more, the viscosity of the resin [D] can be moderately suppressed, and uneven adhesion can be suppressed. The melting temperature is more preferably 150°C or more. On the other hand, when the melting temperature is 300°C or less, thermal decomposition of the resin [D] can be suppressed even when the production of the molding material takes a long time. The melting temperature is more preferably 250°C or less. By bringing the resin [D] in a molten state at 100 to 300°C into contact with the carbon fibers [B], the resin [D] can be stably supplied.

Next, a step (step (II)) of heating and impregnating the carbon fibers [B], to which the resin [D] is attached, obtained in the step (I) will be described. Specifically, the carbon fibers [B] are impregnated with the resin [D] to the inside by an operation such as applying tension to the carbon fibers [B] to which the resin [D] is attached with a roll or a bar, repeating widening and bundling, or applying pressure or vibration at a temperature at which the resin [D] is melted. A more specific example includes a method of performing widening or the like by passing the carbon fibers [B] having the resin [D] attached thereto such that the carbon fibers [B] are brought into contact with the surfaces of a plurality of heated rolls or bars. In particular, a method of impregnation using a squeezing nozzle, a squeezing roll, a roll press, or a double belt press is suitably used. Here, the squeezing nozzle is a nozzle in which the diameter of the nozzle narrows in the advancing direction, and is a nozzle which scrapes off an extra attached resin [D] while bundling the carbon fibers [B] and promotes impregnation at the same time. The squeezing roll is a roller that applies tension to the carbon fibers [B] with a roller to scrape off the excess adhered resin [D] and promote impregnation. The roll press is a device that continuously removes air inside the carbon fibers [B] by a pressure between two rolls and simultaneously promotes impregnation. The double belt press is a device that promotes impregnation by pressing carbon fibers [B] from above and below via belts.

The carbon fibers [B] are preferably impregnated with 80 to 100 wt% of the supply amount of the resin [D] by the step (II). Since it directly affects the yield, it is preferable that the impregnation amount with respect to the supply amount be higher from the viewpoint of economic efficiency and productivity. The impregnation amount is more preferably 85 to 100 wt%, still more preferably 90 to 100 wt%. When the impregnation amount is 80 wt% or more, in addition to the viewpoint of economic efficiency, generation of a volatile component caused by the resin [D] in the step (II) can be suppressed, and generation of voids in the fiber bundle [H] can be suppressed.

In the step (II), the maximum temperature of the resin [D] is preferably 150 to 400°C. When the maximum temperature is 150°C or more, the carbon fibers [B] can be more effectively impregnated by sufficiently melting the resin [D]. The maximum temperature is more preferably 180°C or more, still more preferably 200°C or more. On the other hand, when the maximum temperature is 400°C or less, an undesirable side reaction such as a decomposition reaction of the resin [D] can be suppressed. The maximum temperature is more preferably 380°C or less, still more preferably 350°C or less.

The heating method in the step (II) is not particularly limited, and specific examples thereof include a method of using a heated chamber, and a method of simultaneously performing heating and pressurization using a hot roller.

In addition, it is preferable to perform heating under a non-oxidizing atmosphere from the viewpoint of suppressing occurrence of an undesirable side reaction such as a crosslinking reaction or a decomposition reaction of the resin [D]. Here, the non-oxidizing atmosphere refers to an atmosphere having an oxygen concentration of 5 vol% or less, preferably 2 vol% or less, and more preferably not containing oxygen, that is, an inert gas atmosphere such as nitrogen, helium, or argon. In particular, a nitrogen atmosphere is preferred from the viewpoint of economic efficiency and ease of handling.

A step of opening the carbon fiber [B] bundle in advance may be provided before the steps (I) and (II). The opening is an operation of separating converged carbon fiber bundle, and an effect of further enhancing the impregnation property of the resin [D] can be expected. When the carbon fiber bundle is opened, the thickness of the carbon fiber bundle is reduced. When the width of the carbon fiber bundle before opening is $b_1$ (mm), the thickness is $a_1$ ($\mu$m), the width of the carbon fiber bundle after opening is $b_2$ (mm), and the thickness is $a_2$ ($\mu$m), the opening ratio = $(b_2/a_2)/(b_1/a_1)$ is preferably 2.0 or more, and more preferably 2.5 or more.

The method for opening the carbon fiber bundle is not particularly limited, and for example, a method of passing the carbon fiber bundle alternately through uneven rolls, a method of using a drum-type roll, a method of applying tension fluctuation to axial vibration, a method of varying the tension of the carbon fiber bundle by two friction bodies that reciprocate vertically, a method of blowing air to the carbon fiber bundle, and the like can be used.

A desired molding material can be obtained by covering the fiber bundle [H] with the thermoplastic resin [A] or a resin composition containing the thermoplastic resin [A].

The molding material may contain other components in addition to the components [A] to [D] as long as the object of the present invention is not impaired. Examples of the other components include the flame retardant [E], the thermally conductive filler [F], and carbon black [G]. Specific examples and preferred blending amounts of the components [E] to [G] are the same as those exemplified for the molded article of the present invention.

When the molding material has a core-sheath structure, the components [E] to [G] may be contained in the core structure, the sheath structure, or both of them.

When the surface of the fiber bundle [H] is covered with the thermoplastic resin [A] to obtain a molding material, the thermoplastic resin [A] or the resin composition containing the thermoplastic resin [A] is preferably melt-kneaded at a resin pressure of 1.0 MPa or more. Here, the resin pressure is a value measured with a resin pressure gauge attached to a melt-kneading apparatus, and the gauge pressure is defined as the resin pressure. The resin pressure is not particularly limited as long as it is 1.0 MPa or more and the mechanical performance allows, and the resin pressure is preferably in a range of 1 to 10 MPa, and further preferably in a range of 1.5 to 7 MPa because deterioration of the resin is small.

The method for adjusting the resin pressure at the time of melt-kneading is not particularly limited, and examples thereof include improvement of the resin viscosity by lowering the melt-kneading temperature, selection of a polymer having a molecular weight so as to achieve a target resin pressure, retention of the resin by a screw arrangement change such as reverse full flight or introduction of a kneading block, increase of the filling rate of the polymer in the barrel, increase of the screw rotation speed, improvement of the resin viscosity by mixing any additive, and a supercritical state such as introduction of carbon dioxide.

The molding material described above is molded by a method such as injection molding or press molding to form a molded article. From the viewpoint of the handleability of the molding material, it is preferable that the fiber bundle [H] and the thermoplastic resin [A] or the resin composition containing the thermoplastic resin [A] be not separated while being adhered until molding is performed, and maintain the shape as described above. Since the shape (size and aspect ratio), specific gravity, and mass of the fiber bundle [H] and the thermoplastic resin [A] or the resin composition containing the thermoplastic resin [A] are completely different from each other, they may be classified during transportation and handling of a material up to molding or during material transfer in a molding step to cause variation in dynamic properties of the molded article, cause mold clogging due to a decrease in fluidity, or cause blocking in the molding step. However, in the disposition of the core-sheath structure as exemplified in Fig. 3, the thermoplastic resin [A] or the resin composition containing the thermoplastic resin [A] constrains the fiber bundle [H], and a stronger composite can be obtained.

The molding material may be continuous or cut to a certain length as long as substantially the same sectional shape is maintained in the axial direction. The length of the molding material is preferably cut to a length in a range of 11 mm or less and 5 mm or more, and by adjusting the length to such a length, fluidity and handleability at the time of molding can be sufficiently enhanced. A particularly preferred aspect of the molding material obtained by being cut into an appropriate length as described above can be exemplified by a long-fiber pellet for injection molding.

The molding method for obtaining the molded article of the present invention is not particularly limited, and examples thereof include molding methods excellent in productivity such as injection molding, autoclave molding, press molding, filament winding molding, and stamping molding. These methods may be combined. Integrated molding such as insert molding and outsert molding can also be applied. Among them, a molding method using a mold is preferred, and a continuously stable molded article can be obtained particularly by a molding method using an injection molding machine. The conditions for the injection molding are not particularly specified, and for example, the following conditions are preferred: injection time: 0.5 seconds to 15 seconds, more preferably 1 second to 10 seconds, back pressure: 0.1 MPa to 20 MPa, more preferably 2 to 15 MPa, further preferably 3 MPa to 10 MPa, holding pressure: 1 MPa to 150 MPa, more preferably 5 MPa to 100 MPa, holding time: 1 second to 20 seconds, more preferably 5 seconds to 20 seconds, cylinder temperature: 200°C to 320°C, and mold temperature: 20°C to 100°C. Here, the cylinder temperature refers to a temperature of a portion of the injection molding machine to heat and melt the molding material, and the mold temperature refers to a temperature of a mold into which a resin for forming a predetermined shape is injected. By appropriately selecting these conditions, especially the injection time, the back pressure, and the mold temperature, the weight-average fiber length $[L_w]$ of the carbon fibers [B] in the molded article can be adjusted to fall within the above-mentioned preferred range.

Examples of applications of the molded article of the present invention include various modules such as instrument panels, door beams, under covers, lamp housings, pedal housings, radiator supports, spare tire covers, and front ends, automobile parts/members such as cylinder head covers, bearing retainers, intake manifolds, and pedals, and an outer plates thereof, aircraft related parts/members such as landing gear pads, winglets, spoilers, edges, ladders, failing, and ribs, and outer plates thereof, household and office electrical appliance parts such as telephones, facsimiles, VTRs, copy machines, televisions, microwave ovens, toiletries, refrigerators, and air conditioners, housings of personal computers, digital cameras, mobile phones, and the like, electric or electronic device members such as a keyboard support that is a member for supporting a keyboard inside the personal computer, related parts/members and outer plates of acoustic equipment such as speakers and microphones, outer wall member of acoustic equipment, and sports-related parts and members such as bicycle parts, fishing rods, heads of reels and golf clubs, shafts, and exterior parts thereof.

The molded article of the present invention is excellent in oscillation-sustaining property and excellent in acoustic properties, and thus is suitably used for acoustic equipment and acoustic facility among the above-mentioned applications. In addition, in some sports-related parts and members such as fishing rods, heads of golf clubs, and shafts, oscillation-sustaining property and acoustic properties are useful as additional values. For example, for the outer plate of acoustic equipment, excellent oscillation-sustaining property causes oscillations due to sound to be resonated without being impaired by the outer plate, and thus, the sound is not confined inside the outer plate, and clear sound quality can be obtained. For a fishing rod or the shaft of a golf club, excellent oscillation-sustaining property enables the vibration of the tip of the fishing rod or the golf club to transmit to the hand of a user without being impaired, and therefore it is possible to obtain a fishing rod or a golf club with additional value of excellent feeling. Similarly to the outer plate of acoustic equipment described above, for the head of a golf club, excellent oscillation-sustaining property causes the oscillation due to the hitting sound when a ball is hit to be discharged outside without being impaired inside the head, and the ball-hitting sound does not stay inside the head, therefore the acoustic properties of the ball-hitting sound are excellent. Furthermore, excellent oscillation-sustaining property and acoustic properties may be required in some electric and electronic devices other than acoustic equipment, for example, office automation equipment, home electric appliances, and automobile parts. The molded article of the present invention can be suitably used for all of these applications requiring excellent oscillation-sustaining property and acoustic properties.

EXAMPLES

Hereinafter, the present invention will be described in detail with reference to Examples, but the following Examples do not limit the present invention. First, methods for evaluating various characteristics will be described.

(1) Weight-Average Fiber Length of Carbon Fiber [B] in Molded Article

A test piece of 80 mm × 10 mm × 4 mm in thickness obtained in each Example and Comparative Example was notched at a notch angle of 45° and a depth of 2 mm in accordance with ISO 2818:2018. In accordance with ISO 179-1:2010, the notched test piece was broken using a hammer of 1.0 J then heated in a state of being sandwiched between glass plates on a hot stage set at 200 to 300°C to form a film in the molded article, whereby the carbon fibers [B] were uniformly dispersed. The film in which the carbon fibers [B] were uniformly dispersed was observed using an optical microscope (50 to 200 magnifications). Fiber lengths of randomly selected 1000 carbon fibers [B] were measured. Since common carbon fibers were used in all Examples, the density and diameter of the carbon fibers were the same, and therefore the weight-average fiber length ($L_W$) was calculated from the following formula.

$$\text{Weight-average fiber length} = \Sigma(Mi^2 \times Ni)/\Sigma(Mi \times Ni)$$

Mi: Fiber length (mm)
Ni: Number of fibers with a fiber length Mi

(2) Bending Elastic Modulus of Molded Article

For the ISO dumbbell test piece obtained in each Example and Comparative Example, the bending elastic modulus was measured under a test condition of a test speed of 2 mm/min, setting the distance between supporting points to 64 mm using a three-point bending test jig (indenter radius: 5 mm) in accordance with ISO 178:2010, Amd. 1:2013. As a tester, "Instron" (registered trademark) Universal Tester Model 5566 (manufactured by Instron) was used.

(3) Oscillation-Sustaining Property of Molded Article

A test piece of 12.7 mm × 170 mm × 1 mmt obtained in each Example and Comparative Example was subjected to a test by a one-end fixed striking method in accordance with JIS G 0602:1993 "Oscillation Damping Property Test Method for Damping Steel Sheet", and a free oscillation waveform with a horizontal axis representing time and a vertical axis representing displacement was obtained. From the obtained free oscillation waveform, a logarithmic decrement was calculated using the above Formula (1). For the cycle n, the logarithmic decrement was calculated in the 100th cycle.

(4) Acoustic Performance Evaluation

A test piece of 12.7 mm × 170 mm × 1 mmt obtained in each Example and Comparative Example was attached to the upper face of a cantilever made of SUS304 (15 mm × 15 mm × 0.5 mm in thickness) with a double-sided tape with an acrylic adhesive, and then the length of reverberation was measured when a position on the fixed side at 10 mm from the end on the free end side was hit from a position with a height of 30 mm with a metal rod made of SUS 304 ($\varphi$ 5 × 200 mm). A case where sound reverberated for 2 seconds or more was rated as A, a case where sound reverberated for 1.5 seconds or more and less than 2 seconds was rated as B, a case where sound reverberated for 1 second or more and less than 1.5 seconds was rated as C, and a case where sound reverberated for less than 1 second was rated as D.

(5) Interfacial Shear Strength Between Thermoplastic Resin [A] and Carbon Fiber [B]

<First Step>

First, a carbon fiber single yarn or a carbon fiber bundle cut into a length easy to handle is prepared, and in the case of a fiber bundle, a single yarn is extracted from the fiber bundle. The extracted single yarn is directly stuck to a fixing jig with an adhesive. After the adhesive was cured, the end of the single yarn was cut so that the length of the single yarn protruding from both ends of the fixing jig was 20 mm to obtain a single yarn with a fixing jig in which the single yarn protruded straightly from both ends of the fixing jig. The single yarn attached to the fixing jig was observed using an optical microscope, the length in the fiber diameter direction was measured at three points, and the average thereof was taken as the fiber diameter df.

<Second Step>

The single yarn with a fixed jig obtained in the first step was lowered from above a thermoplastic resin heated on a heater, and one end of the single yarn was embedded in the resin. At this time, the embedding depth was controlled to about 300 μm using a micrometer. The resin in which the single yarn with a fixing jig was embedded was cooled to normal temperature, and then the single yarn was cut at a position protruding 15 mm from the resin to obtain a single yarn embedded sample.

<Third Step>

The single yarn embedded sample produced in the second step was fixed to a stage of a vertical tensile tester using an adhesive, and a tensile test was performed at a speed of 1 μm/sec. The maximum load value at the test was measured, and the interfacial shear strength τ was calculated by the following Formula (2).

$$\tau = F/(\pi \cdot df \cdot H) \times 10^{-6} \quad \ldots \quad (2)$$

τ: Interfacial shear strength at fiber/thermoplastic resin interface (MPa)
F: Maximum load value (N)
π: Circumference ratio
df: Fiber diameter (μm)

The embedding depth H (μm) was obtained by the following Formula (3) using the distance X (μm) from the lowest portion of the thermoplastic resin at the time of embedding to the tip of the single yarn and the height Y (μm) of the thermoplastic resin after completion of embedding.

$$H = Y - X \quad \ldots \quad (3)$$

(6) Measurement of Tensile Modulus of Carbon Fiber

The tensile modulus of the carbon fibers is determined according to the following procedure in accordance with the resin-impregnated strand test method of JIS R7608:2004. However, when the fiber bundle of carbon fibers has twists, the fiber bundle is untwisted by applying the same number of twists of reverse rotation as the number of twists, and then evaluated. As a resin formulation, "Celloxide (registered trademark)" 2021P (manufactured by Daicel Chemical Industries, Ltd.)/boron trifluoride monoethylamine (manufactured by Tokyo Chemical Industry Co., Ltd.)/acetone = 100/3/4 (parts by mass) is used, and as curing conditions, normal pressure, a temperature of 125°C, and a time of 30 minutes are used. Ten strands of the carbon fiber bundle are measured, and the average value thereof is taken as the strand elastic modulus. The strain range in calculating the strand elastic modulus is 0.1 to 0.6%.

(Reference Example 1) Production of carbon fiber [B-4]

A spinning solution containing a polyacrylonitrile copolymer composed of acrylonitrile and itaconic acid was prepared. A coagulated thread was obtained by a dry-wet spinning method in which the spinning solution was once discharged into air from a spinneret and then introduced into a coagulation bath composed of an aqueous solution of dimethyl sulfoxide. The obtained coagulated thread was washed with water and then stretched at a stretching ratio in a bath of three times in warm water at 90°C, a silicone oil agent was added thereto, and drying was performed using a roller heated to a temperature of 160°C. Further, pressure water vapor stretching was performed at a stretching ratio of four times to obtain a precursor fiber bundle for carbon fiber having a single fiber fineness of 1.1 dtex. Next, the obtained precursor fiber bundle was combined, the number of single fibers was set to 24,000, and heat treatment was performed at a stretching ratio of 1.1 in an oven at 230 to 280°C in an air atmosphere to convert the precursor fiber bundle into a stabilized fiber bundle. The obtained stabilized fiber bundle was subjected to a twisting treatment, and a preliminarily carbonization treatment was performed at a stretching ratio of 1.0 in a nitrogen atmosphere at a temperature of 300 to 800°C to obtain a preliminarily carbonized fiber bundle. Subsequently, the preliminarily carbonized fiber bundle was subjected to a carbonization treatment under the conditions of a stretching ratio of 1.02 and a carbonization temperature of 1900°C, and then a sizing agent was not added to obtain a carbon fiber bundle [B-4].

(Reference Example 2) Production of Fiber Bundle [H]

A liquid film obtained by heating and melting a resin [D] shown in each Example and Comparative Example was formed on a roll heated to a coating temperature of 150°C. To form a film having a constant thickness on the roll, a reverse roll was used. A carbon fiber [B] bundle shown in each Example and Comparative Example was caused to pass over the roll while being in contact with the roll to attach the resin [D]. Next, under a nitrogen atmosphere, the film was passed between five sets of roll presses having a diameter of 50 mm in a chamber heated to an impregnation temperature of 250°C. By this operation, the inside of the carbon fiber bundle was impregnated with the resin [D] to form a fiber bundle [H].

(Reference Example 3) Production of Thermoplastic Resin Composition

With a TEX-30α type twin-screw extruder (screw diameter: 30 mm, die diameter: 5 mm, barrel temperature: 260°C, screw rotation speed: 150 rpm) manufactured by JSW, a thermoplastic resin [A] and a compound [C] shown in each Example and Comparative Example were dry-blended so as to have the composition ratio shown in each Example and Comparative Example, the resulting material was supplied from a main hopper, and a molten resin composition was discharged from a die port while being degassed by a downstream vacuum vent. The obtained strand was cooled and then cut with a cutter, whereby pellets of a thermoplastic resin composition were obtained.
Raw materials used in each Example and Comparative Example are shown below.

Thermoplastic resin [A]

[A-1] A polyarylene sulfide resin (PPS resin "TORELINA (registered trademark) M2888" manufactured by Toray Industries, Inc.) was used.
[A-2] A polyamide resin (Nylon 6 resin "AMILAN (registered trademark) CM1001" manufactured by Toray Industries, Inc.) was used.
[A-3] A polyamide resin (Nylon 610 resin "AMILAN (registered trademark) CM2001" manufactured by Toray Industries, Inc.) was used.
[A-4] A polycarbonate resin (aromatic polycarbonate resin "Panlite (registered trademark) L-1225L" manufactured by Teijin Chemicals Ltd.) was used.

Carbon fiber [B]

[B-1] As a carbon fiber [B-1], TORAYCA (registered trademark) T700S-24000-50E manufactured by Toray Industries, Inc. was used. The value obtained by measuring the tensile modulus of the carbon fiber [B-1] according to (6) was 230 GPa, and the diameter was 7 μm.
[B-2] As a carbon fiber [B-2], TORAYCA (registered trademark) M40J-12000-50E manufactured by Toray Industries, Inc. was used. The value obtained by measuring the tensile modulus of the carbon fiber [B-2] according to (6) was 377 GPa, and the diameter was 5 μm.
[B-3] As a carbon fiber [B-3], TORAYCA (registered trademark) T800S-24000-10E manufactured by Toray Industries, Inc. was used. The value obtained by measuring the tensile modulus of the carbon fiber [B-3] according to (6) was 295 GPa, and the diameter was 5 μm.
[B-4] The carbon fiber prepared in Reference Example 1 was used. The value obtained by measuring the tensile modulus of the carbon fiber [B-4] according to (6) was 390 GPa. The obtained carbon fiber had a diameter of 7 μm.
[B-5] As a carbon fiber [B-5], TORAYCA (registered trademark) T700S-24000-60E manufactured by Toray Industries, Inc. was used. The value obtained by measuring the tensile modulus of the carbon fiber [B-5] according to (6) was 230 GPa, and the diameter was 7 μm.

Compound [C]

[C-1] As an aliphatic polycarbodiimide, "CARBODILITE (registered trademark) HMV-8CA" (manufactured by Nisshinbo Chemical Inc.) was used.

Resin [D]

[D-1] A solid bisphenol A-type epoxy resin ("jER" (registered trademark) 1004AF manufactured by Mitsubishi Chemical Corporation) was used.

[D-2] A terpene phenol resin ("Mighty Ace (registered trademark) YP-902" manufactured by Yasuhara Chemical Co., Ltd.) was used.

(Example 1)

A resin composition containing [A-1] prepared in accordance with Reference Example 3 was supplied from a main hopper of a TEX-30α type twin-screw extruder (screw diameter 30 mm, L/D = 32), and melt-kneaded. On the other hand, the fiber bundle [H] obtained by impregnating the carbon fiber [B-1] with the resin [D-1] in accordance with Reference Example 2 was passed through a coating die for a wire coating method installed at the tip of the twin-screw extruder. The resin composition containing [A-1] in a molten state was discharged into the coating die and continuously disposed so as to cover the periphery of the fiber bundle [H]. At this time, the resin pressure measured by a resin pressure gauge attached to the melt-kneading apparatus was 1 MPa. In addition, the discharge amount of the resin composition was adjusted such that the blending amount of various raw materials was as shown in Table 1 per 100 parts by weight of the total of the thermoplastic resin [A], the carbon fiber [B], and the compound [C] at this time. The obtained continuous molding material was cooled and then cut with a cutter, whereby a resin molding material in the form of 7 mm long fiber pellets was obtained.

The obtained molding material in the form of long fiber pellets was injection-molded under the conditions of injection time: 2 seconds, back pressure: 10 MPa, pressure holding time: 10 seconds, cylinder temperature: 280°C, and mold temperature: 90°C using an SE75DUZ-C250 type injection molding machine manufactured by Sumitomo Heavy Industries, Ltd., whereby an ISO dumbbell test piece (type A1 test piece specified in JIS K 7152-1:1999), a test piece of 12.7 mm × 170 mm × 1 mm thickness, and a test piece of 80 mm × 10 mm × 4 mm thickness were produced. Here, the cylinder temperature refers to a temperature of a portion of the injection molding machine to heat and melt the molding material, and the mold temperature refers to a temperature of a mold into which a molding material for forming a predetermined shape is injected. The obtained test pieces were allowed to stand for 24 hours in a constant temperature and humidity room adjusted to a temperature of 23°C and 50% RH, and then evaluated by the above-described method. The evaluation results are shown in Table 1.

(Examples 2 and 3)

Molded articles were produced and evaluated in the same manner as in Example 1 except that the contents of [A] to [D] were changed as shown in Table 1. The evaluation results are shown in Table 1.

(Examples 4, 15, and 16)

Molded articles were produced and evaluated in the same manner as in Example 1 except that the carbon fiber [B-1] was changed to the carbon fiber [B-2] and the contents of the components [A] to [D] were changed as shown in Table 1. The evaluation results are shown in Table 1.

(Examples 5 and 6)

Molded articles were produced and evaluated in the same manner as in Example 1 except that the carbon fiber [B-1] was changed to the carbon fiber [B-3] and the contents of the components [A] to [D] were changed as shown in Table 1. The evaluation results are shown in Table 1.

(Examples 7 to 12, 17, and 18)

Molded articles were produced and evaluated in the same manner as in Example 1 except that the carbon fiber [B-1] was changed to the carbon fiber [B-4] and the contents of the components [A] to [D] were changed as shown in Tables 1 to 3. The evaluation results are shown in Tables 1 to 3.

# EP 4 067 426 A1

(Example 13)

A molded article was produced and evaluated in the same manner as in Example 1 except that the thermoplastic resin [A-1] was changed to the thermoplastic resin [A-2], the carbon fiber [B-1] was changed to the carbon fiber [B-3], and the contents of the components [A] to [D] were changed as shown in Table 2. The evaluation results are shown in Table 2.

(Example 14)

A molded article was produced and evaluated in the same manner as in Example 1 except that the thermoplastic resin [A-1] was changed to the thermoplastic resin [A-2], the carbon fiber [B-1] was changed to the carbon fiber [B-4], and the contents of the components [A] to [D] were changed as shown in Table 2. The evaluation results are shown in Table 2.

(Example 19)

A molded article was produced and evaluated in the same manner as in Example 1 except that the thermoplastic resin [A-1] was changed to the thermoplastic resin [A-3], the carbon fiber [B-1] was changed to the carbon fiber [B-4], the resin [D-1] was changed to the resin [D-2], and the contents of the components [A] to [D] were changed as shown in Table 3. The evaluation results are shown in Table 3.

(Example 20)

A molded article was produced and evaluated in the same manner as in Example 1 except that the thermoplastic resin [A-1] was changed to the thermoplastic resin [A-4], the carbon fiber [B-1] was changed to the carbon fiber [B-4], and the contents of the components [A] to [D] were changed as shown in Table 3. The evaluation results are shown in Table 3.

(Comparative Examples 1 and 2)

Molded articles were produced and evaluated in the same manner as in Example 1 except that the contents of [A] to [D] were changed as shown in Table 4. The evaluation results are shown in Table 4.

(Comparative Example 3)

A molded article was produced and evaluated in the same manner as in Example 1 except that the carbon fiber [B-1] was changed to the carbon fiber [B-5] and the contents of the components [A] to [D] were changed as shown in Table 4. The evaluation results are shown in Table 4.

(Comparative Example 4)

With a TEX-30$\alpha$ type twin-screw extruder (screw diameter: 30 mm, die diameter: 5 mm, barrel temperature: 320°C, screw rotation speed: 150 rpm) manufactured by JSW, the thermoplastic resin [A-1], the carbon fiber [B-1], and the component [C-1] were dry-blended so as to have the composition ratio shown in Table 4, and the resulting material was supplied from a main hopper and melt-kneaded while being degassed by a downstream vacuum vent. The molten resin composition was discharged from a die opening, and the obtained strand was cooled and then cut with a cutter, whereby pellets of the thermoplastic resin composition were obtained.

The obtained pellet-shaped molding material was injection-molded under the conditions of injection time: 2 seconds, back pressure: 10 MPa, pressure holding time: 10 seconds, cylinder temperature: 280°C, and mold temperature: 90°C using an SE75DUZ-C250 type injection molding machine manufactured by Sumitomo Heavy Industries, Ltd., whereby an ISO dumbbell test piece (type A1 test piece specified in JIS K 7152-1:1999), a test piece of 12.7 mm × 170 mm × 1 mm thickness, and a test piece of 80 mm × 10 mm × 4 mm thickness were produced. Here, the cylinder temperature refers to a temperature of a portion of the injection molding machine to heat and melt the molding material, and the mold temperature refers to a temperature of a mold into which a molding material for forming a predetermined shape is injected. The obtained test pieces were allowed to stand for 24 hours in a constant temperature and humidity room adjusted to a temperature of 23°C and 50% RH, and then evaluated by the above-described method. The evaluation results are shown in Table 4.

21

(Comparative Example 5)

A molded article was produced and evaluated in the same manner as in Comparative Example 4 except that the carbon fiber [B-1] was changed to the carbon fiber [B-5] and the contents of the components [A] to [D] were changed as shown in Table 4. The evaluation results are shown in Table 4.

(Comparative Example 6)

A molded article was produced and evaluated in the same manner as in Comparative Example 4 except that the contents of the components [A] to [D] were changed as shown in Table 4. The evaluation results are shown in Table 4.

(Comparative Example 7)

A molded article was produced and evaluated in the same manner as in Example 1 except that the thermoplastic resin [A-1] was changed to the thermoplastic resin [A-2], the carbon fiber [B-1] was changed to the carbon fiber [B-5], and the contents of the components [A] to [D] were changed as shown in Table 4. The evaluation results are shown in Table 4.

[Table 1]

| | | | | Example 1 | Example 2 | Example 3 | Example 4 | Example 5 | Example 6 | Example 7 |
|---|---|---|---|---|---|---|---|---|---|---|
| Raw material | Thermoplastic resin (A) | Type | - | A-1 | A-1 | A-1 | A-1 | A-1 | A-1 | A-1 |
| | | Blending amount | Parts by weight | 65.0 | 64.0 | 59.0 | 69.0 | 55.0 | 54.0 | 70.0 |
| | Carbon fiber (B) | Type | - | B-1 | B-1 | B-1 | B-2 | B-3 | B-3 | B-4 |
| | | Blending amount | Parts by weight | 35.0 | 35.0 | 40.0 | 30.0 | 45.0 | 45.0 | 30.0 |
| | Compound (C) | Type | - | - | C-1 | C-1 | C-1 | - | C-1 | - |
| | | Blending amount | Parts by weight | - | 1.0 | 1.0 | 1.0 | - | 1.0 | - |
| | Resin (D) | Type | - | D-1 | D-1 | D-1 | D-1 | D-1 | D-1 | D-1 |
| | | Blending amount | Parts by weight | 9.5 | 9.5 | 11.0 | 8.5 | 11.0 | 11.0 | 8.5 |
| Molded article | Average fiber length | Lwb | mm | 1.5 | 1.2 | 1.2 | 0.5 | 1.0 | 0.9 | 1.2 |
| Evaluation results | Bending elastic modulus | | GPa | 30.0 | 30.0 | 33.0 | 37.0 | 41.0 | 41.0 | 41.0 |
| | Interfacial shear strength | | MPa | 17.0 | 21.0 | 21.0 | 17.0 | 17.0 | 20.0 | 17.0 |
| | Logarithmic decrement | | - | 2.7 | 2.5 | 2.3 | 2.8 | 2.4 | 1.8 | 2.4 |
| | Acoustic property | | - | C | C | A | C | B | A | B |

[Table 2]

| | | | | Example 8 | Example 9 | Example 10 | Example 11 | Example 12 | Example 13 | Example 14 |
|---|---|---|---|---|---|---|---|---|---|---|
| Raw material | Thermoplastic resin (A) | Type | - | A-1 | A-1 | A-1 | A-1 | A-1 | A-2 | A-2 |
| | | Blending amount | Parts by weight | 69.0 | 59.0 | 54.0 | 59.9 | 50.0 | 55.0 | 70.0 |
| | Carbon fiber (B) | Type | - | B-4 | B-4 | B-4 | B-4 | B-4 | B-3 | B-4 |
| | | Blending amount | Parts by weight | 30.0 | 40.0 | 45.0 | 40.0 | 40.0 | 45.0 | 30.0 |
| | Compound (C) | Type | - | C-1 | C-1 | C-1 | C-1 | C-1 | - | - |
| | | Blending amount | Parts by weight | 1.0 | 1.0 | 1.0 | 0.1 | 10.0 | - | - |
| | **Resin** (D) | Type | - | D-1 | D-1 | D-1 | D-1 | D-1 | D-2 | D-2 |
| | | Blending amount | Parts by weight | 8.5 | 11.0 | 12.0 | 11.0 | 11.0 | 11.0 | 12.0 |
| Molded article | Average fiber length | Lwb | mm | 1.0 | 1.0 | 0.9 | 1.1 | 0.7 | 1.0 | 1.2 |
| Evaluation results | Bending elastic modulus | | GPa | 41.0 | 45.0 | 50.0 | 41.0 | 43.0 | 37.0 | 36.0 |
| | Interfacial shear strength | | MPa | 20.0 | 20.0 | 20.0 | 18.0 | 45.0 | 25.0 | 22.0 |
| | Logarithmic decrement | | - | 2.0 | 1.8 | 1.5 | 2.2 | 1.2 | 1.6 | 1.8 |
| | Acoustic property | | - | A | A | A | A | A | A | A |

EP 4 067 426 A1

[Table 3]

| | | | | Example 15 | Example 16 | Example 17 | Example 18 | Example 19 | Example 20 |
|---|---|---|---|---|---|---|---|---|---|
| Raw material | Thermoplastic resin (A) | Type | - | A-1 | A-1 | A-1 | A-1 | A-3 | A-4 |
| | | Blending amount | Parts by weight | 80.0 | 79.0 | 80.0 | 79.0 | 70.0 | 70.0 |
| | Carbon fiber (B) | Type | - | B-2 | B-2 | B-4 | B-4 | B-4 | B-4 |
| | | Blending amount | Parts by weight | 20.0 | 20.0 | 20.0 | 20.0 | 30.0 | 30.0 |
| | Compound (C) | Type | - | - | C-1 | - | C-1 | - | - |
| | | Blending amount | Parts by weight | - | 1.0 | - | 1.0 | - | - |
| | Resin (D) | Type | - | D-1 | D-1 | D-1 | D-1 | D-2 | D-1 |
| | | Blending amount | Parts by weight | 5.7 | 5.7 | 5.7 | 5.7 | 12.0 | 8.5 |
| Molded article | Average fiber length | Lwb | mm | 0.9 | 0.8 | 1.5 | 1.4 | 1.4 | 1.3 |
| Evaluation results | Bending elastic modulus | | GPa | 30.0 | 30.0 | 31.0 | 31.0 | 36.0 | 34.0 |
| | Interfacial shear strength | | MPa | 15.0 | 17.0 | 17.0 | 20.0 | 25.0 | 23.0 |
| | Logarithmic decrement | | - | 2.8 | 2.6 | 2.6 | 2.5 | 1.8 | 1.9 |
| | Acoustic property | | - | C | C | C | C | A | A |

[Table 4-1]

| | | | | Comparative Example 1 | Comparative Example 2 | Comparative Example 3 | Comparative Example 4 |
|---|---|---|---|---|---|---|---|
| Raw material | Thermoplastic resin (A) | Type | - | A-1 | A-1 | A-1 | A-1 |
| | | Blending amount | Parts by weight | 97.0 | 69.0 | 65.0 | 69.0 |
| | Carbon fiber (B) | Type | - | B-1 | B-1 | B-5 | B-1 |
| | | Blending amount | Parts by weight | 3.0 | 30.0 | 35.0 | 30.0 |
| | Compound (C) | Type | - | - | C-1 | - | C-1 |
| | | Blending amount | Parts by weight | - | 1.0 | - | 1.0 |
| | Resin (D) | Type | - | D-1 | D-1 | D-1 | - |
| | | Blending amount | Parts by weight | 1.0 | 8.5 | 9.5 | - |
| Molded article | Average fiber length | Lwb | mm | 1.8 | 1.2 | 1.4 | 0.2 |
| Evaluation results | Bending elastic modulus | | GPa | 5.0 | 27.0 | 30.0 | 25.0 |
| | Interfacial shear strength | | MPa | 17.0 | 21.0 | 13.0 | 21.0 |
| | Logarithmic decrement | | - | 6.0 | 4.5 | 4.9 | 4.7 |
| | Acoustic property | | - | D | D | D | D |

[Table 4-2]

| | | | | Comparative Example 5 | Comparative Example 6 | Comparative Example 7 |
|---|---|---|---|---|---|---|
| Raw material | Thermoplastic resin (A) | Type | - | A-1 | A-1 | A-2 |
| | | Blending amount | Parts by weight | 65.0 | 40.0 | 65.0 |
| | Carbon fiber (B) | Type | - | B-5 | B-1 | B-5 |
| | | Blending amount | Parts by weight | 35.0 | 60.0 | 35.0 |
| | Compound (C) | Type | - | - | - | - |
| | | Blending amount | Parts by weight | - | - | - |
| | Resin (D) | Type | - | - | - | - |
| | | Blending amount | Parts by weight | - | - | - |
| Molded article | Average fiber length | Lwb | mm | 0.2 | 0.1 | 1.4 |
| Evaluation results | Bending elastic modulus | | GPa | 25.0 | 47.0 | 30.0 |
| | Interfacial shear strength | | MPa | 12.0 | 17.0 | 13.0 |
| | Logarithmic decrement | | - | 5.2 | 4.4 | 4.9 |
| | Acoustic property | | - | D | D | D |

The molded articles of Examples 1 to 12 and 15 to 18 exhibited excellent acoustic properties. When a carbon fiber having a higher tensile modulus was used as the carbon fiber [B], more excellent acoustic properties were exhibited. Examples 13, 14, 19, and 20 exhibited excellent acoustic properties even when the thermoplastic resin was changed.

On the other hand, in Comparative Examples 1 and 2, since the content of the carbon fiber [B] was small, the bending elastic modulus of the molded article was low, the logarithmic decrement was larger than 3, and the acoustic properties were deteriorated. In Comparative Examples 3 and 7, since the interfacial shear strength between the thermoplastic resin [A] and the carbon fiber [B] was low, the logarithmic decrement was large, and the acoustic properties were deteriorated. In Comparative Examples 4 and 5, since a molded article was produced using a molding material obtained by melt-kneading, the weight-average fiber length ($L_w$) of the carbon fibers in the molded article was short, and therefore, the logarithmic decrement was large, and the acoustic properties were deteriorated. In Comparative Example 6, since the content of the carbon fiber [B] was large, fiber breakage was large, and the weight-average fiber length ($L_w$) of the carbon fiber [B] in the molded article was short, and therefore, the logarithmic decrement was large, and the acoustic properties were deteriorated.

DESCRIPTION OF REFERENCE SIGNS

1:    Thermoplastic resin [A]
2:    Carbon fiber [B]
3:    Compound [C]
4:    Resin [D]
5:    Fiber bundle [H]

**Claims**

**1.**  A fiber reinforced thermoplastic resin molded article comprising a thermoplastic resin [A] and carbon fibers [B], a content of the thermoplastic resin [A] being 50 to 95 parts by weight and a content of the carbon fibers [B] being 5 to 50 parts by weight per 100 parts by weight of a total of the thermoplastic resin [A] and the carbon fibers [B], the molded article having a bending elastic modulus of 30 GPa or more, an interfacial shear strength between the thermoplastic resin [A] and the carbon fibers [B] being 15 MPa or more, and a logarithmic decrement of the molded article calculated by Formula (1) shown below being less than 3:

$$\text{Logarithmic decrement } \delta = (1/n) \times \ln(\alpha_{(1)}/\alpha_{(1+n)})$$

Formula (1)

$\delta$: logarithmic decrement
n: cycle (n = 100)
$\alpha_{(1)}$: maximum amplitude value
$\alpha_{(1+n)}$: an amplitude value of the nth cycle counting from the cycle having the maximum amplitude value.

2. The fiber reinforced thermoplastic resin molded article according to claim 1, wherein the carbon fibers [B] have a weight-average fiber length ($L_w$) of 0.5 to 10.0 mm.

3. The fiber reinforced thermoplastic resin molded article according to claim 1 or 2, wherein the carbon fibers [B] have a tensile modulus of 250 GPa or more.

4. The fiber reinforced thermoplastic resin molded article according to any one of claims 1 to 3, further comprising a compound [C] having a reactive functional group, wherein
a content of the compound [C] is 0.1 to 10 parts by weight per 100 parts by weight of a total of the thermoplastic resin [A], the carbon fibers [B], and the compound [C].

5. The fiber reinforced thermoplastic resin molded article according to any one of claims 1 to 4, wherein the thermoplastic resin [A] is a resin containing a polyphenylene sulfide resin.

Fig. 1

Fig. 2

Fig. 3

2、4

5

1、3

Fig. 4

5

1、3

## INTERNATIONAL SEARCH REPORT

| International application No. |
| --- |
| PCT/JP2020/042998 |

### A. CLASSIFICATION OF SUBJECT MATTER
C08K 5/00(2006.01)i; C08K 7/06(2006.01)i; C08L 81/02(2006.01)i; C08L 101/00(2006.01)i; C08J 5/04(2006.01)i
FI: C08J5/04 CEZ; C08L81/02; C08K7/06; C08L101/00; C08K5/00
According to International Patent Classification (IPC) or to both national classification and IPC

### B. FIELDS SEARCHED

Minimum documentation searched (classification system followed by classification symbols)
C08K5/00; C08K7/06; C08L81/02; C08L101/00; C08J5/04

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2015-214612 A (TORAY INDUSTRIES, INC.) 03 December 2015 (2015-12-03) claims, paragraphs [0171]-[0270], examples, fig. 1-11 | 1-5 |
| X<br>A | JP 2014-516822 A (TICONA LLC) 17 July 2014 (2014-07-17) claims, paragraphs [0081]-[0094], examples | 1, 3, 5<br>2, 4 |
| A | JP 2015-081321 A (TORAY INDUSTRIES, INC.) 27 April 2015 (2015-04-27) claims, examples, entire text | 1-5 |
| A | WO 2017/073483 A1 (TORAY INDUSTRIES, INC.) 04 May 2017 (2017-05-04) claims, examples, entire text | 1-5 |
| A | JP 2014-145037 A (TORAY INDUSTRIES, INC.) 14 August 2014 (2014-08-14) claims, examples, entire text | 1-5 |
| A | JP 2015-519423 A (TICONA LLC) 09 July 2015 (2015-07-09) claims, examples, entire text | 1-5 |

☐ Further documents are listed in the continuation of Box C.  ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 12 January 2021 (12.01.2021) | 26 January 2021 (26.01.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application no. |
|---|
| PCT/JP2020/042998 |

| Patent Documents referred in the Report | Publication Date | Patent Family | Publication Date |
|---|---|---|---|
| JP 2015-214612 A | 03 Dec. 2015 | (Family: none) | |
| JP 2014-516822 A | 17 Jul. 2014 | US 2014/0106166 A1 claims, paragraphs [0093]-[0106], examples WO 2012/142107 A1 EP 2697043 A1 TW 201306054 A CA 2831358 A CN 103501986 A KR 10-2014-0015462 A BR 112013025217 A | |
| JP 2015-081321 A | 27 Apr. 2015 | (Family: none) | |
| WO 2017/073483 A1 | 04 May 2017 | US 2018/0312648 A1 claims, examples EP 3369765 A1 KR 10-2018-0079345 A CN 108350192 A TW 20172864 7 A | |
| JP 2014-145037 A | 14 Aug. 2014 | US 2015/0247025 A1 claims, examples WO 2014/061336 A1 EP 2910676 A1 TW 201418337 A KR 10-2015-0047638 A CN 104736759 A | |
| JP 2015-519423 A | 09 Jul. 2015 | US 2013/0273280 A1 claims, examples WO 2013/155407 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015064482 A
- JP 6221924 B
- JP S453368 B
- JP S5212240 B
- JP S617332 A